# EUROPEAN PATENT SPECIFICATION

(11) **EP 0 385 783 B1**
(45) Date of publication and mention of the grant of the patent: **03.05.1995**
(21) Application number: 90302202.8
(22) Date of filing: 01.03.1990
(51) Int. Cl.: G06K 7/016, G06K 7/14

(54) **Bar code reading apparatus**
Lesegerät für Strichkodierungen
Lecteur de codes à bâtonnets

(30) Priority: 03.03.1989 JP 51294/89
(43) Date of publication of application: 05.09.1990
(73) Proprietor: FUJITSU LIMITED, Kawasaki-shi, Kanagawa 211 (JP)
(72) Inventor: Sato, Shinichi, Kawasaki-shi, Kanagawa 211 (JP)
(74) Representative: Fane, Christopher Robin King

(56) References cited:
- US-A- 4 074 852
- US-A- 4 125 765
- US-A- 4 379 224

## Description

### BACKGROUND OF THE INVENTION

The present invention generally relates to a bar code reading apparatus, and more particularly to a bar code reading apparatus capable of precisely reading a bar code even when it is printed on a wrapper or the like with a positional error so that a margin area preceding or following the bar code is less than a predetermined width.

Conventionally, a bar code reading apparatus is used in a point-of-sales system. The bar code reading apparatus reads bar codes attached to wrappers of goods or the like. As is known, it is necessary to precisely recognize margin areas provided before and after the bar code and thereby read the bar code without errors.

A conventional bar code reading apparatus scans a bar code by a scanner and determines whether a margin area (normally a "white" area) is equal to or greater than a predetermined width (generally equal to seven modules). Such a bar code reading apparatus is disclosed in United States Patent No. 4,074,852.

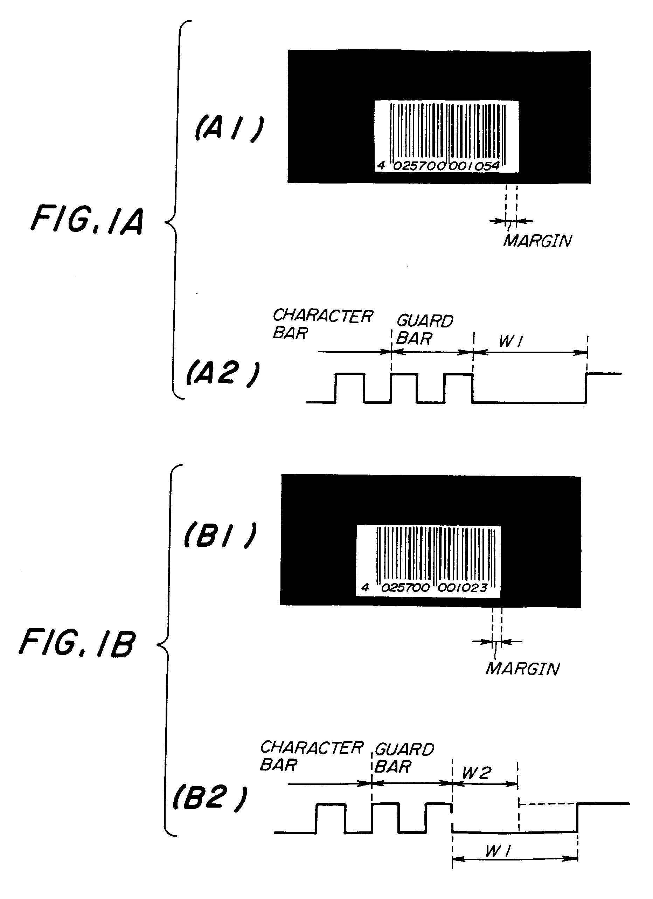

As shown in FIG.1A, there is no problem when the conventional bar code reading apparatus scans a rear margin area which is equal to or greater than a predetermined width W1. It is noted that the last character bar is followed by guard bars, which are followed by the margin area. A low level of the illustrated signal indicates "white", and a high level thereof indicates "black". In contrast, the conventional bar code reading apparatus cannot read bar precisely in a case in which, as shown in FIG.1B, a bar code is printed in a rectangular white area incorrectly with respect to a surrounding black area (margin defining area or black frame) so that a margin area before or after the bar code is less than the predetermined width W1 (in the illustrated case, a rear margin area after the guard bars has a width W2 less than the predetermined width W1). A similar problem may occur in a case in which the front portion or rear portion of the bar code itself is curved, or when a bar code label attached on a wrapper is warped due to the presence a good contained therein.

### SUMMARY OF THE INVENTION

It is a general object of the present invention to provide an improved bar code reading apparatus in which the above-mentioned disadvantages are eliminated.

A more specific object of the present invention is to provide a bar code reading apparatus capable of correctly detecting margin areas located before and after the bar code so that the bar code can be read precisely.

According to a first aspect of the present invention there is provided a bar code reading apparatus for reading a bar code having a character bar and a guard bar followed by a rear margin area, which apparatus comprises:
scanning means for scanning such a bar code and for generating a pulse signal corresponding to the bar code;
measuring means connected to the said scanning means for receiving the said pulse signal and operable to employ that signal to produce a series of measurement values corresponding to the pattern of bars across the bar code, each of which measurement values represents the combined width of two consecutive bars in the bar code, one of which bars is black and the other is white, the second of the bars of one measurement value being the first bar of the next measurement value in the series; and
margin detection means arranged for processing the said measurement values of the said series and operable to generate a margin detection signal either upon detecting that one of those values is greater than or equal to a predetermined normal rear margin reference value or upon detecting that, for two consecutive measurement values of the said series, the second of those two values is greater than or equal to a predetermined rear black frame reference value and the first of those two values is greater than or equal to a predetermined minimum rear margin reference value that is less than the said normal rear margin reference value.

According to a second aspect of the present invention there is provided a bar code reading apparatus for reading a bar code having a front margin area followed by a guard bar and a character bar, which apparatus comprises:
scanning means for scanning such a bar code and for generating a pulse signal corresponding to the bar code;
measuring means connected to the said scanning means for receiving the said pulse signal and operable to employ that signal to produce a series of measurement values corresponding to the pattern of bars across the bar code, each of which measurement values represents the combined width of two consecutive bars in the bar code, one of which bars is black and the other is white, the second of the bars of one measurement value being the first bar of the next measurement value in the series; and
margin detection means arranged for processing the said measurement values of the said series and operable to generate a margin detection signal either upon detecting that one of those values is greater than or equal to a predetermined normal front margin reference value or upon detecting that, for two consecutive measurement values of the said series, the first of those two values is greater than or equal to a predetermined front black frame reference value and the second of those two values is greater than or equal to a predetermined minimum front margin reference value that is less than the said normal front margin reference value.

In apparatus embodying the aforesaid first aspect of the present invention, in order to permit detection of the front margin as well, the margin detection means are preferably also operable to generate the said margin detection signal either upon detecting that one of the said measurement values is greater than or equal to a predetermined normal front margin reference value or upon detecting that, for two consecutive measurement values of the said series, the first of those two values is greater than or equal to a predetermined front black frame reference value and the second of those two values is greater than or equal to a predetermined minimum front margin reference value that is less than the said normal front margin reference value.

### BRIEF DESCRIPTION OF THE DRAWINGS

Fig. 1A is a diagram illustrating a case in which a conventional bar code apparatus scans a normal rear margin area of a bar code;
Fig. 1B is a diagram illustrating a problem of the conventional bar code apparatus caused by an abnormal margin area;
Fig. 2 is a block diagram illustrating an outline of a bar code reading apparatus embodying the present invention;
Fig. 3 is a waveform diagram illustrating the operation of a bar code reading apparatus embodying the first aspect of the present invention;
Fig. 4 is a block diagram illustrating one example of the configuration of a bar code reading apparatus embodying the first aspect of the present invention;
Fig. 5 is a block diagram of a bar code reading apparatus according to a preferred embodiment of the first aspect of the present invention;
Fig. 6 is a block diagram of a bar code reading apparatus according to a preferred embodiment of the second aspect of the present invention;
Fig. 7 is a waveform diagram illustrating the operation of the embodiment shown in Fig. 6;
Fig. 8 is a circuit diagram of a circuit which is designed to combine a margin detection signal produced by the embodiment shown in Fig. 5 with a margin detection signal produced by the embodiment shown in Fig. 6;
Fig. 9A is a block diagram of a variation of the embodiment shown in Fig. 5; and
Fig. 9B is a block diagram of a variation of the embodiment shown in Fig. 6.

### DESCRIPTION OF THE PREFERRED EMBODIMENTS

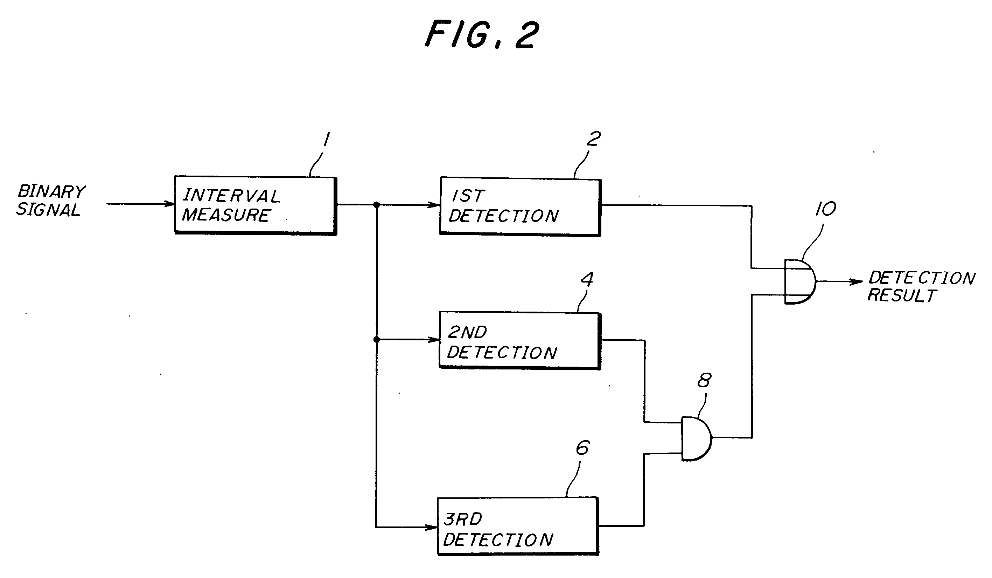

Referring to Fig. 2, there is illustrated a general configuration of a bar code reading apparatus embodying the present invention. The bar code reading apparatus in Fig. 2 includes an interval measuring circuit 1, a first detection circuit 2, a second detection circuit 4, a third decision circuit 6, an AND gate 8 and an OR gate 10.

The interval measuring circuit 1 measures an interval between the leading edges of two consecutive pulses of a digital signal applied thereto and generates a measurement value indicative of the measured interval. The interval measuring circuit 1 also measures an interval between the trailing edges of two adjacent pulses thereof and generates a measurement value indicative of the measured interval. Thus, each measurement value generated by the interval measuring circuit 1 represents the sum of the widths (combined width) of two consecutive bars in the bar code, one of which bars is black and the other is white. Such a combined width (measured interval) is frequently called a delta distance. Hereinafter, such measurement values (each representing the sum of the widths of two consecutive white and black or black and white bars) which are output from the interval measuring circuit 1 are also referred to as measured intervals or widths.

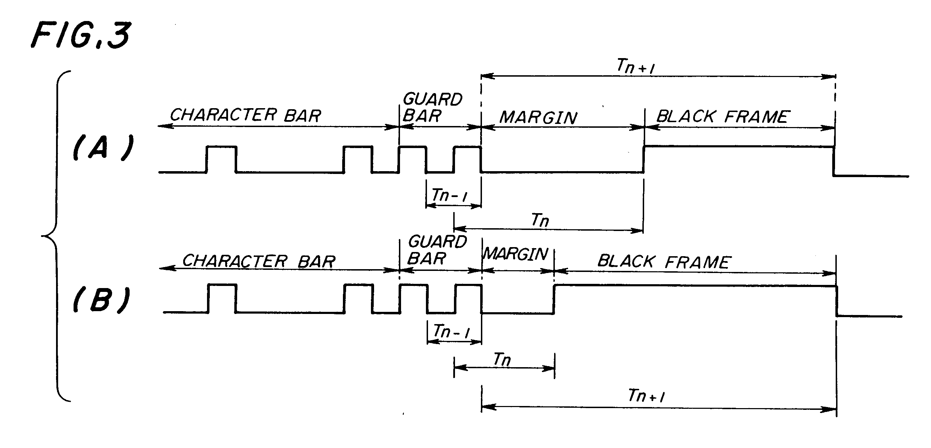

The first, second and third detection circuits 2, 4 and 6 use a series of the measurement values (measured intervals) Tₙ₋₁, Tₙ and Tₙ₊₁, where n is an integer. The second bar of one measurement value of this series is the first bar of the next measurement value in the series. For example, as shown in Fig. 3, Tₙ₋₁, Tₙ and Tₙ₊₁ can be regarded as relating to a guard bar, a rear margin area and a margin defining area (a black frame), respectively. In practice, as will be described in detail later, the widths of the guard bar, rear margin area and black frame are each represented by the sum of the widths of two consecutive white and black or black and white bars.

The first detection circuit 2 detects two consecutive bars having a combined width equal to or greater than a first reference value (normal margin reference value), which is a preselected multiple of a value equal to one module. For this purpose, the first detection circuit 2 determines whether or not the measured interval Tₙ relating to the margin area and preceding guard bar (it can also be said that Tₙ provides a measure of the width of the white bar constituting the margin area) is equal to or greater than the first reference value. If the margin areas of the bar codes to be scanned have a normal width of seven modules, the first reference value is set equal to or greater than seven modules. It can be seen that in the case of scanning the rear margin of the bar code the measured interval Tₙ₋₁ corresponds to the sum of the width of the white guard bar and the width of the subsequent black guard bar, i.e. two modules, so that the first reference value is preferably a predetermined multiple of the measured interval Tₙ₋₁, i.e. the first reference value is A₁Tₙ₋₁, where A₁ is a coefficient. Thus, the first detection circuit 2 determines whether or not the measured interval Tn is equal to or greater than A₁Tₙ₋₁. When the normal width of the margin area is equal to seven modules, it is preferable that the coefficient A₁ be equal to or greater than 3.5. That is, the first reference value A₁Tₙ₋₁ corresponds to a normal width of the margin area.

The second detection circuit 4 detects two consecutive bars having a combined width equal to or greater than a second reference value (minimum margin reference value) less than the aforementioned first reference value. For this purpose, the second detection circuit 4 determines whether or not the measured interval Tn is equal or greater than a second reference value. It is preferable that the second reference value be equal to a predetermined multiple of the measured interval Tₙ₋₁, i.e. the second reference value is A₂Tₙ₋₁, where A₂ is another coefficient, less than the coefficient A₁. When the margin area is normally equal to seven modules in width, it is preferable that the coefficient A₂ be equal to or greater than 1.25 and equal to or less then 3.5. In this case, the second detection circuit 4 detects two consecutive bars (margin area and preceding guard bar) having a combined width between 2.5 times a single module and 7 times a single module. That is, the second detection circuit 4 is intended to determine whether or not the margin area (strictly the margin area and preceding guard bar) has a width equal to or greater than a predetermined minimum margin area width represented by the second reference value (A₂Tₙ₋₁).

The third detection circuit 6 detects two consecutive bars (margin area and black frame) having a combined width equal to or greater than a third reference value. For this purpose, the third detection circuit 6 determines whether or not the measured interval Tₙ₊₁, which in the case of scanning the rear margin of the bar code relates to the margin area and the margin defining area (black frame), is equal to or greater than a third reference value (black frame reference value). It is preferable that the third reference value be equal to a predetermined multiple of the measured interval Tₙ₋₁ relating to the guard bar, i.e. the third reference value is A₃Tₙ₋₁, where A₃ is a coefficient. In the case of detecting the rear margin the third detection circuit 6 is intended to determine whether or not a black area (black frame) having a sufficient width follows the white area (margin area). When the margin area is normally equal to seven modules in width, it is preferable that the coefficient A₃ be equal to or greater than 3. In this case, the third detection circuit 6 detects two consecutive bars, (margin area and margin defining area) having a combined width equal to or greater than six modules. Thus, in this case the third reference value A₃Tₙ₋₁ also approximately corresponds to a normal width of the margin area. As will be described in detail later, the first, second and third detection circuits 2, 4 and 6 operate in a similar way when the front margin area is detected.

Detection signals from the second and third detection circuits 4 and 6 are supplied to the AND gate 8. Outputs from the first detection circuit 2 and the AND gate 10 are supplied to the OR gate, which outputs a margin detection signal. It is noted that the first detection circuit 2 is based on a conventional margin detection algorithm. Thus, there is a possibility that the first detection circuit 2 does not detect margin areas correctly due to a poor positioning precision in printing the bar code in the white area within the black frame (margin defining area), for example. Even in such a case, in bar code reading apparatus embodying the present invention the second and third detection circuits can correctly detect a margin area having a width less than the predetermined width (equal to seven modules, for example).

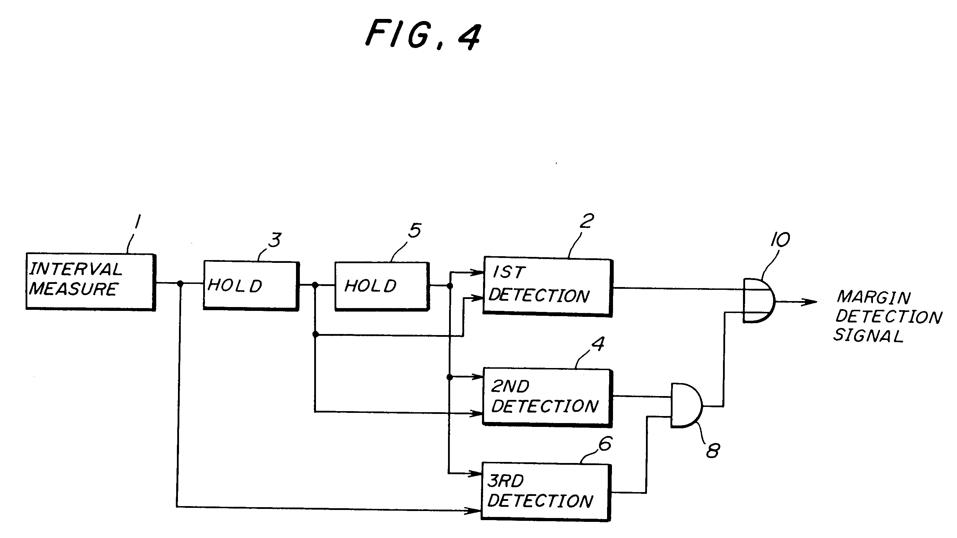

In the configuration shown in FIG.4 the apparatus includes a first data holding circuit 3 and a second holding circuit 5. The first data holding circuit 3 holds the current measured interval from the interval measuring circuit 1 until a next measured interval is output from the interval measuring circuit 1. An output signal from the first data holding circuit 3 is supplied to the second data holding circuit 5 and the first and second detection circuits 2 and 4. The second holding circuit 5 holds the current measured interval from the first holding circuit 3 until the next data measured interval is output from the first data holding circuit 3. An output signal from the second holding circuit 5 is supplied to the first, second and third detection circuits 2, 4 and 6. With this arrangement of the first and second data holding circuits 3 and 5, the measured intervals Tₙ₋₁, Tₙ and Tₙ₊₁ are supplied to the first, second and third holding circuits 2, 4 and 6 at the same time.

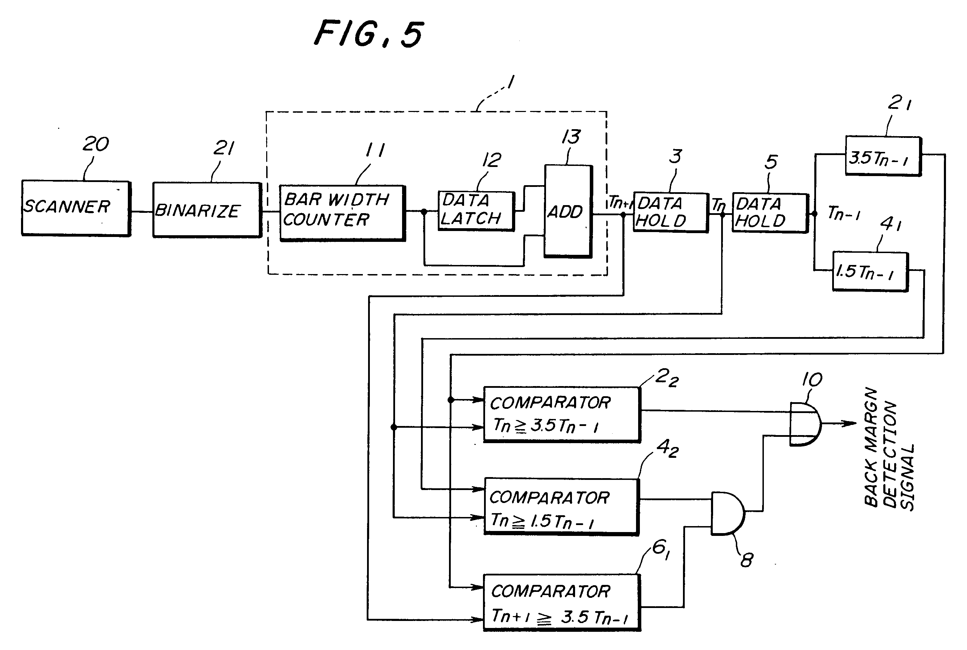

FIG.5 is a detailed block diagram of the bar code reading apparatus shown in FIG.4, in which those parts which are the same as those shown in the previous figures are given the same reference numerals. The configuration shown in FIG.5 is directed to precisely detecting a near margin area following the bar code. Referring to FIG.5, a bar code scanner 20 scans a bar code and generates an electrical output signal. A digitizing circuit 21 digitizes the output signal from the bar code scanner 21, and supplies the interval measuring circuit 1 with a digital signal. The interval measuring circuit 1 is made up of a bar width counter 11, a data latch circuit 12 and an adder 13. The bar width counter 11 measures the width of each white/black bar. The data latch circuit 12 latches the current bar width until the width of the next bar is output from the bar width counter 11. The adder 13 adds output signals from the bar width counter 11 and the data latch circuit 12. When the signal from the bar width counter 11 relates to a white bar, the signal from the data latch circuit 12 relates to a black bar preceding the white bar. In contrast, when the signal from the bar width counter 11 relates to a black bar, the signal from the data latch circuit 12 relates to a white bar preceding the black bar. The adder 13 outputs the sum of the width of the white bar (black bar) and the width of the black bar (white bar). The sum output from the adder 13 is a measurement value which corresponds to the aforementioned measured interval.

The output signal (measurement value) from the adder 13 is supplied to the first data holding circuit 3 and a comparator 6₁, which is a part of the third detection circuit 6 shown in FIG.4. The first data holding circuit (latch circuit) 3 holds the current measurement value (measured interval) from the adder 13 unit the next measurement value (measured interval) is output therefrom. The output signal from the first data holding circuit 3 is supplied to the second data holding circuit (latch circuit) 5 and comparators 2₂ and 4₂. The second data holding circuit 5 holds the current measurement value (measured interval) (output from the first data holding circuit 3 until the next measurement value is output therefrom. The output signal from the second data holding circuit 5 is supplied to multipliers 2₁ and 4₁.

The first detection circuit 2 shown in FIG.4 is composed of the multiplier 2₁ and the comparator 2₂. The second detection circuit 2 shown in FIG.4 is composed of the multiplier 2₁ and the comparator 4₂. The third detection circuit 6 shown in FIG.4 is connected to the multiplier 2₁ and comprises the comparator 6₁. In the configuration shown in FIG.5, the aforementioned constant A₁ is set equal to the constant A₃, and A₁ = A₃ = 3.5. Further, the constant A₂ is set equal to 1.5. The multiplier 2₁ multiplies the measurement value Tₙ (measured interval) by 3.5. The multiplier 4₁ multiplies the measurement value Tₙ₋₁ (measured interval) by 1.5. An output signal from the multiplier 2₁ is supplied to the comparators 2₂ and 6₁. An output signal from the multiplier 4₁ is supplied to the comparator 4₂.

When the adder 13 outputs the measurement value (measured interval) Tₙ₊₁, the data holding circuits 3 and 5 output the measurement values (measured intervals) Tₙ and Tₙ₋₁, respectively, and the multipliers 2₁ and 4₁ output the normal rear margin and minimum rear margin reference values 3.5Tₙ₋₁ and 1.5Tₙ₋₁, respectively. The comparator 2₂ determines whether or not the measured interval Tₙ is equal to or greater than 3.5Tₙ₋₁ (Tn ≧ 3.5Tₙ₋₁). The comparator 4₂ determines whether or not the measured interval Tₙ is equal to or greater than 1.5Tₙ₋₁ (Tn ≧ 1.5Tn). The comparator 6₁ determines whether or not the measured interval Tₙ₊₁ is equal to or greater than 3.5Tₙ₋₁ (Tₙ₊₁ ≧ 3.5Tₙ₋₁). Detection signals from the comparators 4₂ and 6₁ are supplied to the AND gate 8. Output signals 2₂ and the AND gate 8 are supplied to the OR gate 10, which outputs a rear margin detection signal.

Referring to FIG.3(A), when Tₙ ≧ 3.5Tₙ₋₁, the comparator 2₂ outputs a high-level signal, which passes through the OR gate 10 and is output as the rear margin detection signal. FIG.3(B) illustrates a case where the measured interval Tₙ is less than 3.5Tₙ₋₁. In this case, the output of the comparator 2₂ is low. When Tₙ ≧ 1.5Tₙ₋₁ and Tₙ₊₁ ≧ 3.5Tₙ₋₁, the comparators 4₂ and 6₁ generate high-level outputs. In this case, the AND gate 8 generates a high-level output, which passes through the OR gate 10 and provides the rear margin detection signal. Thus, it is possible to detect a bar code which is printed out of its predetermined position in a white area surrounded by a black margin defining area or which is curved so that the margin area after the bar code is less in width than the predetermined value.

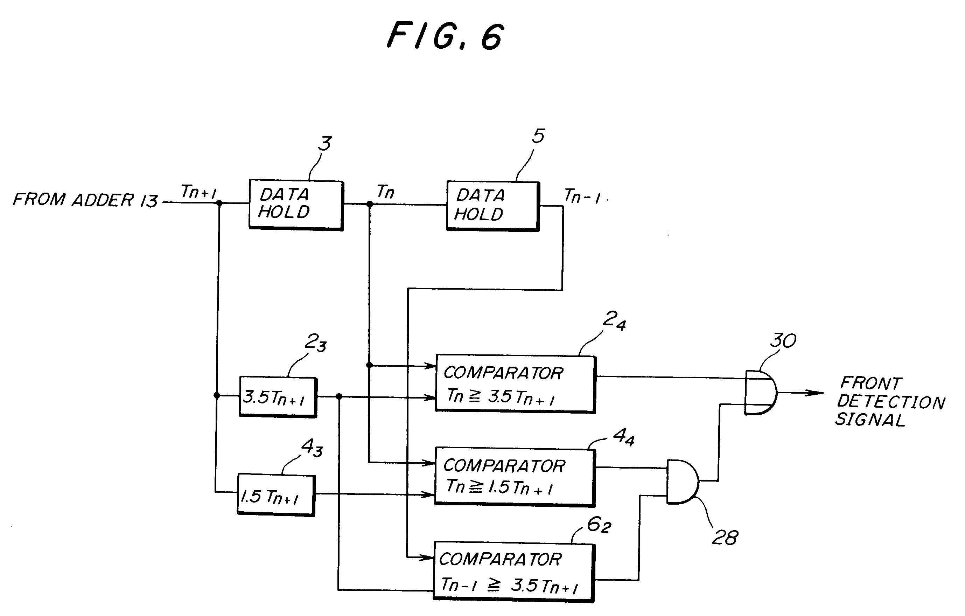

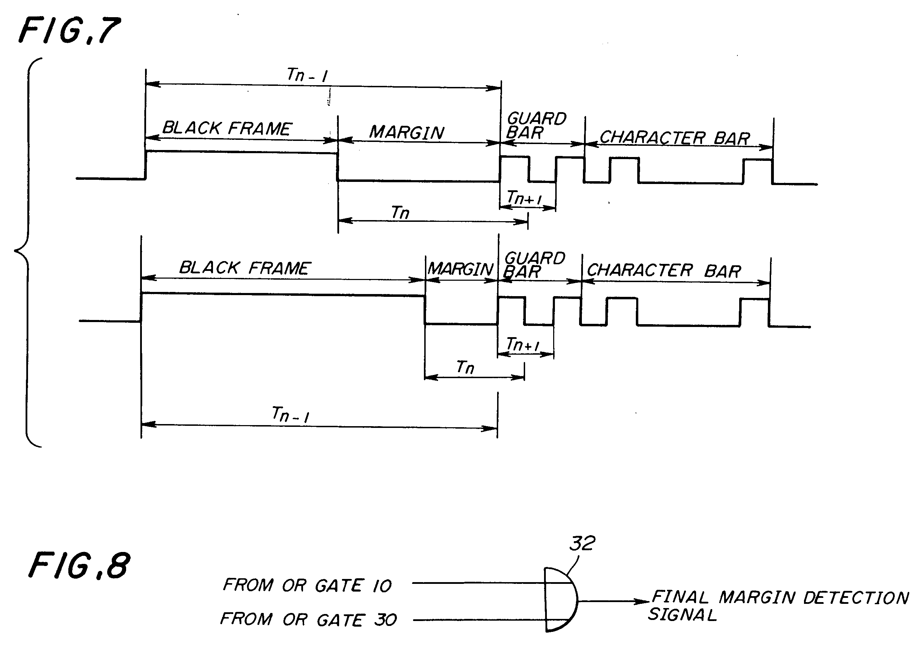

A description is given of a second embodiment of the present invention with reference to FIGS.6 and 7, in which those parts which are the same as those shown in FIG.5 are given the same reference numerals. The second embodiment is directed to reliably detecting a front margin area which precedes the bar code. Referring to Figs. 6 and 7, when the measurement value (measured interval) Tₙ₋₁, which in the case of scanning the front margin relates to the black frame area (margin defining area) and the margin area, is output from the data holding circuit 5, the measurement value (measured interval) Tₙ₊₁ which in this case relates to the first guard bar and following white bar is applied to the data holding circuit 3, and the measurement value (measured interval) Tₙ relating to the margin area and first guard bar is output from the data holding circuit 3.

The measured interval Tₙ₊₁ is applied to multipliers 2₃ and 4₃. The multiplier 2₃ multiplies the measured interval Tₙ₊₁ by 3.5, and the multiplier 4₃ multiplies the measured interval Tₙ₊₁ by 1.5. An output signal from the multiplier 2₃ is input to comparators 2₄ and 6₂, and an output signal from the multiplier 4₃ is input to a comparator 4₄. Thus, in the Fig. 6 embodiment the first detection circuit 2 shown in Fig. 2 is composed of the multiplier 2₃ and the comparator 2₄. The second detection circuit 4 shown in Fig. 2 is composed of the multiplier 4₃ and the comparator 4₄. The third detection circuit 6 shown in FIG.2 is connected to the multiplier 2₃ and comprises the comparator 6₂.

The comparator 2₄ compares the measured interval Tₙ with the multiplied interval (normal front margin reference value) 3.5Tₙ₊₁ and determines whether Tn ≧ 3.5Tₙ₊₁. The comparator 4₄ compares the measured interval Tn with the multiplied interval (minimum front margin reference value))1.5ₙ₊₁ and determines whether Tn 1.5Tₙ₊₁. The comparator 6₂ compares the measured interval Tₙ₋₁ with the multiplied interval (black frame reference value - in this example equal to the nornal front margin reference value) 3.5Tₙ₊₁ and determines whether Tₙ₋₁ ≧ 3.5 Tₙ₊₁. Detection signals from comparators 4₄ and 6₂ are input to an AND gate 28. An OR gate 30 is supplied with an output signal of the AND gate 28 and a detection signal from the comparator 2₄. An output signal from the OR gate 30 is a front margin detection signal.

In practical use, it is preferable to use the combination of the configurations shown in FIGS.5 and 6. In this arrangement, an OR gate 32 shown in FIG.8 is used. The OR gate 32 is supplied with the rear margin detection signal from the OR gate 10 and with the front margin detection signal from the OR gate 30. An output signal of the OR gate 32 is a finalized margin detection signal. When the front and back margin areas are each correctly detected, the finalized margin detection signal is output from the OR gate 32 twice.

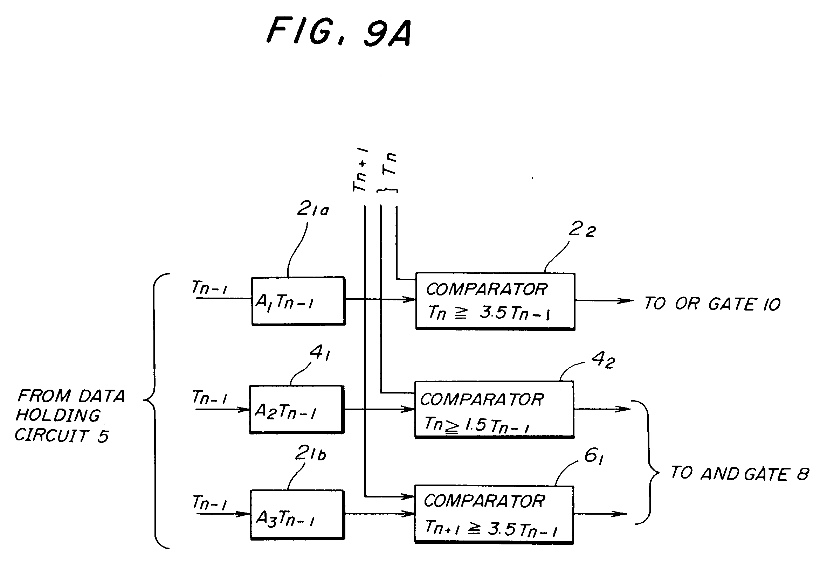

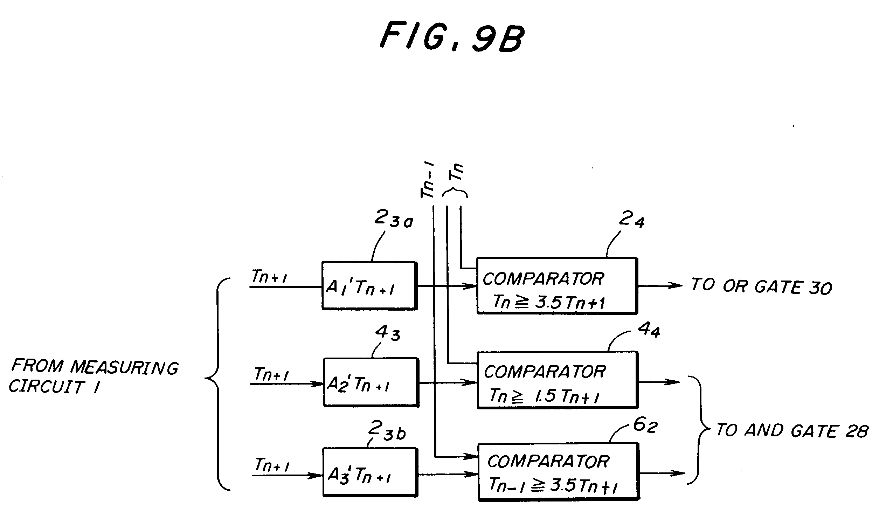

In the configuration shown in FIG.5, the multiplier 2₁ is provided in common to the comparators 2₂ and 6₁. Alternatively, as shown in FIG.9A, it is possible to provide two multipliers 2₁ₐ and 2_{1b} having different coefficients A₁ and A₃ (and hence different reference values) for the comparators 2₂ and 6₁, respectively. As shown in Fig. 9B, a similar arrangement to that shown in Fig. 9A is applicable to the configuration shown in FIG.6. Two multipliers 2₃ₐ and 2_{3b} are provided having different coefficients A₁′ and A₃′. The coefficient of the multiplier 4₃ is represented by A₂′. For example, A₁ - A₃ = A₁′ = A₃′, and A₂ = A₂′.

The present invention is not limited to the aforementioned embodiments, and variations and modifications may be made without departing from the scope of the present invention as defined in the appended claims.

## Claims

1. Bar code reading apparatus for reading a bar code having a character bar and a guard bar followed by a rear margin area, which apparatus comprises:
scanning means (20, 21) for scanning such a bar code and for generating a pulse signal corresponding to the bar code;
measuring means (1) connected to the said scanning means for receiving the said pulse signal and operable to employ that signal to produce a series of measurement values (..., Tₙ₋₁, Tₙ, Tₙ₊₁, ...) corresponding to the pattern of bars across the bar code, each of which measurement values represents the combined width of two consecutive bars in the bar code, one of which bars is black and the other is white, the second of the bars of one measurement value being the first bar of the next measurement value in the series; and
margin detection means (2, 3, 4, 5, 6, 8, 10) arranged for processing the said measurement values of the said series and operable to generate a margin detection signal either upon detecting that one of those values (Tₙ) is greater than or equal to a predetermined normal rear margin reference value (for example 3.5 Tₙ₋₁) or upon detecting that, for two consecutive measurement values (Tₙ, Tₙ₊₁) of the said series, the second (Tₙ₊₁) of those two values is greater than or equal to a predetermined rear black frame reference value (for example 3 Tₙ₋₁) and the first (Tₙ) of those two values is greater than or equal to a predetermined minimum rear margin reference value (for example 1.25 Tₙ₋₁) that is less than the said normal rear margin reference value.

2. Bar code reading apparatus as claimed in claim 1, wherein the said predetermined rear black frame reference value is equal to the said predetermined normal rear margin reference value.

3. Bar code reading apparatus as claimed in claim 1 or 2, wherein the said margin detection means (2, 3, 4, 5, 6, 8, 10) comprise:
first detection means (2) connected operatively to the said measuring means (1) for receiving therefrom the said measurement values and operable to generate a first detection signal upon detecting that one of those values (Tₙ) is greater than or equal to the said predetermined normal rear margin reference value (for example 3.5 Tₙ₋₁);
second detection means (4) also connected operatively to the said measuring means (1) for receiving therefrom the said measurement values and operable to generate a second detection signal upon detecting that one of those values (Tₙ) is greater than or equal to the said predetermined minimum rear margin reference value (for example 1.25 Tₙ₋₁);
third detection means (6) also connected operatively to the said measuring means for receiving therefrom the said measurement values and operable to generate a third detection signal upon detecting that one of those values (Tₙ₊₁) is greater than or equal to the said predetermined rear black frame reference value (for example 3 Tₙ₋₁); and
logic means (8, 10) connected to the said first, second and third detection means (2, 4, 6) for receiving therefrom the said first, second and third detection signals and operable to generate the said margin detection signal either in response to the said first detection signal or in response to both the said second detection signal in respect of the said first (Tₙ) of the said two consecutive measurement values (Tₙ, Tₙ₊₁) and the said third detection signal in respect of the second (Tₙ₊₁) of those two values.

4. Bar code reading apparatus as claimed in claim 3, wherein the said margin detection means (2, 3, 4, 5, 6, 8, 10) further comprise respective first and second holding means (3, 5), each having an input for receiving the said measurement values of the said series sequentially and operable to hold each new measurement value received at the said input, whilst delivering at an output thereof the measurement value previously received at the said input, until the next measurement value of the series is received at the said input;
the said measuring means (1) being connected to the said input of the said first holding means (3) and to the said third detection means (6), and the said output of the first holding means (3) being connected to the said input of the said second holding means (5) and to the said first and second detection means (2, 4), such that, when the said second (Tₙ₊₁) of the said two consecutive measurement values is received at the said input of the said first holding means (3) and by the said third detection means (6), the first (Tₙ) of those two values is delivered from the said output of the first holding means (3) to the said first and second detection means (2, 4) and the measurement value (Tₙ₋₁) that immediately precedes that first value (Tₙ) is delivered from the said output of the said second holding means (5), that immediately-preceding value (Tₙ₋₁) being employed by the said margin detection means to set the said normal rear margin, minimum rear margin and rear black frame reference values.

5. Bar code reading apparatus as claimed in claim 4, wherein:
the said first detection means (2) comprise multiplying means (2₁ₐ) connected to the said output of the said second holding means (5) for multiplying the said immediately-preceding measurement value (Tₙ₋₁) by a first constant (A₁) to produce the said predetermined normal rear margin reference value (A₁Tₙ₋₁), and comparator means (2₂) for generating the said first detection signal if the said first (Tₙ) of the said two consecutive measurement values is greater than or equal to that reference value (A₁Tₙ₋₁);
the said second detection means (4) comprise multiplying means (4₁) connected to the said output of the said second holding means (5) for multiplying the said immediately-preceding measurement value (Tₙ₋₁) by a second constant (A₂) to produce the said predetermined minimum rear margin reference value (A₂Tₙ₋₁), and comparator means (4₂) for generating the said second detection signal if the said first (Tₙ) of the said two consecutive measurement values is greater than or equal to that reference value (A₂Tₙ₋₁); and
the said third detection means (6) comprise multiplying means (2_{1b}) connected to the said output of the said second holding means (5) for multiplying the said immediately-preceding measurement value (Tₙ₋₁) by a third constant (A₃) to produce the said predetermined rear black frame reference value (A₃Tₙ₋₁), and comparator means (6₁) for generating the said third detection signal if the said second (Tₙ₊₁) of the said two consecutive measurement values is greater than or equal to that reference value (A₃Tₙ₋₁).

6. Bar code reading apparatus as claimed in claim 4, wherein:
the said first detection means (2) comprise multiplying means (2₁) connected to the said output of the said second holding means (5) for multiplying the said immediately-preceding measurement value (Tₙ₋₁) by a first constant (A₁) to produce the said predetermined normal rear margin reference value (A₁Tₙ₋₁), and comparator means (2₂) for generating the said first detection signal if the said first (Tₙ) of the said two consecutive measurement values is greater than or equal to that reference value (A₁Tₙ₋₁);
the said second detection means (4) comprise multiplying means (4₁) connected to the said output of the said second holding means (5) for multiplying the said immediately-preceding measurement value (Tₙ₋₁) by a second constant (A₂) to produce the said predetermined minimum rear margin reference value (A₂Tₙ₋₁), and comparator means (4₂) for generating the said second detection signal if the said first (Tₙ) of the said two consecutive measurement values is greater than or equal to that reference value (A₂Tₙ₋₁); and
the said third detection means (6) are connected to the said multiplying means (2₁) of the said first detection means (2) for receiving therefrom the said normal rear margin reference value (A₁Tₙ₋₁) and comprise comparator means (6₁) for generating the said third detection signal if the said second (Tₙ₊₁) of the said two consecutive measurement values is greater than or equal to that reference value (A₁Tₙ₋₁).

7. Bar code reading apparatus for reading a bar code having a front margin area followed by a guard bar and a character bar, which apparatus comprises:
scanning means (20, 21) for scanning such a bar code and for generating a pulse signal corresponding to the bar code;
measuring means (1) connected to the said scanning means for receiving the said pulse signal and operable to employ that signal to produce a series of measurement values (...., Tₙ₋₁, Tₙ, Tₙ₊₁, ...) corresponding to the pattern of bars across the bar code, each of which measurement values represents the combined width of two consecutive bars in the bar code, one of which bars is black and the other is white, the second of the bars of one measurement value being the first bar of the next measurement value in the series; and
margin detection means (2, 3, 4, 5, 6, 28, 30) arranged for processing the said measurement values of the said series and operable to generate a margin detection signal either upon detecting that one of those values (Tₙ) is greater than or equal to a predetermined normal front margin reference value (for example 3.5 Tₙ₊₁) or upon detecting that, for two consecutive measurement values (Tₙ₋₁, Tₙ) of the said series, the first (Tₙ₋₁) of those two values is greater than or equal to a predetermined front black frame reference value (for example 3 Tₙ₊₁) and the second (Tₙ) of those two values is greater than or equal to a predetermined minimum front margin reference value (for example 1.25 Tₙ₊₁) that is less than the said normal front margin reference value.

8. Bar code reading apparatus as claimed in claim 7, wherein the said front black frame reference value is equal to the said normal front margin reference value.

9. Bar code reading apparatus as claimed in claim 7 or 8, wherein the said margin detection means (2, 3, 4, 5, 6, 28, 30) comprise:
first detection means (2) connected operatively to the said measuring means (1) for receiving therefrom the said measurement values and operable to generate a first detection signal upon detecting that one of those values (Tₙ) is greater than or equal to the said predetermined normal front margin reference value (for example 3.5 Tₙ₊₁);
second detection means (4) also connected operatively to the said measuring means (1) for receiving therefrom the said measurement values and operable to generate a second detection signal upon detecting that one of those values (Tₙ) is greater than or equal to the said predetermined minimum front margin reference value (for example 1.25 Tₙ₊₁);
third detection means (6) also connected operatively to the said measuring means for receiving therefrom the said measurement values and operable to generate a third detection signal upon detecting that one of those values (Tₙ₋₁) is greater than or equal to the said predetermined front black frame reference value (for example 3 Tₙ₊₁); and
logic means (28, 30) connected to the said first, second and third detection means (2, 4, 6) for receiving therefrom the said first, second and third detection signals and operable to generate the said margin detection signal either in response to the said first detection signal or in response to the said second detection signal in respect of the second (Tₙ) of the said two consecutive measurement values and the said third detection signal in respect of the first (Tₙ₋₁) of those two values.

10. Bar code reading apparatus as claimed in claim 9, wherein the said margin detection means (2, 3, 4, 5, 6, 28, 30) further comprise respective first and second holding means (3, 5), each having an input for receiving the said measurement values of the said series sequentially and operable to hold each new measurement value received at the said input, whilst delivering at an output thereof the measurement value previously received at the said input, until the next measurement value of the series is received at the said input;
the said measuring means (1) being connected to the said input of the said first holding means (3), the said output of the first holding means (3) being connected to the said input of the said second holding means (5) and to the said first and second detection means (2, 4), and the said output of the said second holding means (5) being connected to the said third detection means (6), such that, when the measurement value (Tₙ₊₁) that immediately follows the said second (Tₙ) of the said two consecutive measurement values is received at the said input of the said first holding means (3), that second value (Tₙ) is delivered from the said output of the first holding means (3) to the said first and second detection means (2, 4) and the first of those two values (Tₙ₋₁) is delivered from the said output of the said second holding means (5) to the said third detection means (5), that immediately-following value (Tₙ₊₁) being employed by the said margin detection means to set the said normal front margin, minimum front margin and front black frame reference values.

11. Bar code reading apparatus as claimed in claim 10, wherein:
the said first detection means (2) comprise multiplying means (2₃ₐ) connected to the said measuring means (1) for multiplying the said immediately-following measurement value (Tₙ₊₁) by a first constant (A₁′) to produce the said predetermined normal front margin reference value (A₁′Tₙ₊₁), and comparator means (2₄) for generating the said first detection signal if the said second (Tₙ) of the said two consecutive measurement values is greater than or equal to that reference value (A₁′Tₙ₊₁);
the said second detection means (4) comprise multiplying means (4₃) connected to the said measuring means (1) for multiplying the said immediately-following measurement value (Tₙ₊₁) by a second constant (A₂′) to produce the said predetermined minimum front margin reference value (A₂′Tₙ₊₁), and comparator means (44) for generating the said second detection signal if the said second (Tₙ) of the said two consecutive measurement values is greater than or equal to that reference value (A₂′Tₙ₊₁); and
the said third detection means (6) comprise multiplying means (2_{3b}) connected to the said measuring means (1) for multiplying the said immediately-following measurement value (Tₙ₊₁) by a third constant (A₃′) to produce the said predetermined front black frame reference value (A₃′Tₙ₊₁), and comparator means (6₂) for generating the said third detection signal if the said first (Tₙ₋₁) of the said two consecutive measurement values is greater than or equal to that reference value (A₃′Tₙ₊₁).

12. Bar code reading apparatus as claimed in claim 10, wherein:
the said first detection means (2) comprise multiplying means (2₃) connected to the said measuring means (1) for multiplying the said immediately-following measurement value (Tₙ₊₁) by a first constant (A₁′) to produce the said predetermined normal front margin reference value (A₁′Tₙ₊₁), and comparator means (2₄) for generating the said first detection signal if the said second (Tₙ) of the said two consecutive measurement values is greater than or equal to that reference value (A₁′Tₙ₊₁);
the said second detection means (4) comprise multiplying means (4₃) connected to the said measuring means (1) for multiplying the said immediately-following measurement value (Tₙ₊₁) by a second constant (A₂) to produce the said predetermined minimum front margin reference value (A₂′Tₙ₊₁), and comparator means (4₄) for generating the said second detection signal if the said second (Tₙ) of the said two consecutive measurement values is greater than or equal to that reference value (A₂′Tₙ₊₁); and
the said third detection means (6) are connected to the said multiplying means (2₃) of the said first detection means (2) for receiving therefrom the said normal front margin reference value (A₁′Tₙ₊₁) and comprise comparator means (6₂) for generating the said third detection signal if the said first (Tₙ₋₁) of the said two consecutive measurement values is greater than or equal to that reference value (A₁′Tₙ₊₁).

13. Bar code reading apparatus as claimed in any one of claims 5, 6, 11 and 12, wherein the said logic means comprise an AND gate (8, 28) having two inputs connected respectively to the said comparator means of the second and third detection means (4, 6) for receiving therefrom the said second and third detection signals and also having an output connected to one input of an OR gate (10, 30) the other input of which is connected to the said comparator means of the said first detection means (2) for receiving therefrom the said first detection signal, which OR gate generates at its output the said margin detection signal.

14. Bar code reading apparatus as claimed in claim 1 or 2 for reading a bar code also having a front margin area followed by a guard bar and a character bar, wherein the said margin detection means (2, 3, 4, 5, 6, 8, 10, 28, 30) are also operable to generate the said margin detection signal either upon detecting that one of the said measurement values (Tₙ) is greater than or equal to a predetermined normal front margin reference value (for example 3.5 Tₙ₊₁) or upon detecting that, for two consecutive measurement values (Tₙ₋₁, Tₙ) of the said series, the first (Tₙ₋₁) of those two values is greater than or equal to a predetermined front black frame reference value (for example 3 Tₙ₊₁) and the second (Tₙ) of those two values is greater than or equal to a predetermined minimum front margin reference value (for example 1.25 Tₙ₊₁) that is less than the said normal front margin reference value.

15. Bar code reading apparatus as claimed in claim 14, wherein the said predetermined front black frame reference value is equal to the said predetermined normal front margin reference value.

16. Bar code reading apparatus as claimed in claim 14 or 15, wherein the said margin detection means (2, 3, 4, 5, 6, 8, 10, 28, 30, 32) comprise:
respective first and second holding means (3, 5), each having an input for receiving the said measurement values of the said series sequentially and operable to hold each new measurement value received at the said input, whilst delivering at an output thereof the measurement value previously received at the said input, until the next measurement value of the series is received at the said input, the said measuring means (1) being connected to the said input of the said first holding means (3), and the said output of the first holding means (3) being connected to the said input of the said second holding means (5), such that, when the third (Tₙ₊₁) of three consecutive measurement values is received at the said input of the said first holding means (3), the second (Tₙ) of those three values is delivered from the said output of the first holding means (3) and the first of those three values (Tₙ₋₁) is delivered from the said output of the said second holding means (5);
first multiplying means (2₁) connected to the said output of the said second holding means (5) for receiving therefrom the first (Tₙ₋₁) of the said three consecutive measurement values and operable to multiply that first measurement value by a first constant (A₁) to produce the said predetermined normal rear margin reference value (A₁Tₙ₋₁);
first comparator means (2₂), connected to the said output of the said first holding means (3) for receiving therefrom the second (Tₙ) of the said three consecutive measurement values and also connected to the said first multiplying means (2₁) for receiving therefrom the said predetermined normal rear margin reference value (A₁Tₙ₋₁), and operable to generate a first detection signal if that second measurement value is greater than or equal to that reference value (A₁Tₙ₋₁) ;
second multiplying means (4₁) connected to the said output of the said second holding means (5) for receiving therefrom the first (Tₙ₋₁) of the said three consecutive measurement values and operable to multiply that first measurement value by a second constant (A₂) to produce the said predetermined minimum rear margin reference value (A₂Tₙ₋₁);
second comparator means (4₂), connected to the said output of the said first holding means (3) for receiving therefrom the second (Tₙ) of the said three consecutive measurement values and also connected to the said second multiplying means (4₁) for receiving therefrom the said predetermined minimum rear margin reference value (A₂Tₙ₋₁), and operable to generate a second detection signal if that second measurement value (Tₙ) is greater than or equal to that reference value (A₂Tₙ₋₁);
third comparator means (6₁), connected to the said measuring means (1) for receiving therefrom the third (Tₙ₊₁) of the said three consecutive measurement values and also connected to the said first multiplying means (21) for receiving therefrom the said predetermined normal rear margin reference value (A₁Tₙ₋₁), and operable to generate a third detection signal if that third measurement value (Tₙ₊₁) is greater than or equal to that reference value (A₁Tₙ₋₁);
third multiplying means (2₃) connected to the said measuring means (1) for receiving therefrom the said third (Tₙ₊₁) of the said three consecutive measurement values and operable to multiply that third measurement value by a third constant (A₁′) to produce the said predetermined normal front margin reference value (A₁′Tₙ₊₁);
fourth comparator means (2₄), connected to the said output of the said first holding means (3) for receiving therefrom the said second (Tₙ) of the said three consecutive measurement values and also connected to the said third multiplying means (2₃) for receiving therefrom the said predetermined normal front margin reference value (A₁′Tₙ₊₁), and operable to generate a fourth detection signal if that second measurement value (Tₙ) is greater than or equal to that reference value (A₁′Tₙ₊₁);
fourth multiplying means (4₃) connected to the said measuring means (1) for receiving therefrom the third (Tₙ₊₁) of the said three consecutive measurement values and operable to multiply that third measurement value by a fourth constant (A₂′) to produce the said predetermined minimum front margin reference value (A₂′Tₙ₊₁);
fifth comparator means (4₄), connected to the output of the said first holding means (3) for receiving therefrom the second (Tₙ) of the said three consecutive measurement values and also connected to the said fourth multiplying means (4₃) for receiving therefrom the said predetermined minimum front margin reference value (A₂′Tₙ₊₁), and operable to generate a fifth detection signal if that second measurement value (Tₙ) is greater than or equal to that reference value (A₂′Tₙ₊₁);
sixth comparator means (6₂), connected to the said output of the said second holding means (5) for receiving therefrom the said first (Tₙ₋₁) of the said three consecutive measurement values and also connected to the said third multiplying means (2₃) for receiving therefrom the said predetermined normal front margin reference value (A₁′Tₙ₊₁), and operable to generate a sixth detection signal if that first measurement value (Tₙ₋₁) is greater than or equal to that reference value (A₁′Tₙ₊₁); and
logic means (8, 10, 28, 30, 32) connected to the said first to sixth comparator means for receiving therefrom the said first to sixth detection signals and operable to generate the said margin detection signal in response to the said first detection signal, or to the said fourth detection signal, or to the said second and third detection signals, or to the said fifth and sixth detection signals.

17. Bar code reading apparatus as claimed in claim 14 or 15, wherein the said margin detection means (2, 3, 4, 5, 6, 8, 10, 28, 30, 32) comprise:
respective first and second holding means (3, 5), each having an input for receiving the said measurement values of the said series sequentially and operable to hold each new measurement value received at the said input, whilst delivering at an output thereof the measurement value previously received at the said input, until the next measurement value of the series is received at the said input, the said measuring means (1) being connected to the said input of the said first holding means (3), and the said output of the first holding means (3) being connected to the said input of the said second holding means (5), such that, when the third (Tₙ₊₁) of three consecutive measurement values is received at the said input of the said first holding means (3), the second (Tₙ) of those three values is delivered from the said output of the first holding means (3) and the first of those three values (Tₙ₋₁) is delivered from the said output of the said second holding means (5);
first multiplying means (2₁ₐ) connected to the said output of the said second holding means (5) for receiving therefrom the first (Tₙ₋₁) of the said three consecutive measurement values and operable to multiply that first measurement value by a first constant (A₁) to produce the said predetermined normal rear margin reference value (A₁Tₙ₋₁);
first comparator means (2₂), connected to the said output of the said first holding means (3) for receiving therefrom the second (Tₙ) of the said three consecutive measurement values and also connected to the said first multiplying means (2₁ₐ) for receiving therefrom the said predetermined normal rear margin reference value (A₁Tₙ₋₁), and operable to generate a first detection signal if that second measurement value (Tₙ) is greater than or equal to that reference value (A₁Tₙ₋₁);
second multiplying means (4₁) connected to the said output of the said second holding means (5) for receiving therefrom the first (Tₙ₋₁) of the said three consecutive measurement values and operable to multiply that first measurement value by a second constant (A₂) to produce the said predetermined minimum rear margin reference value (A₂Tₙ₋₁);
second comparator means (4₂), connected to the said output of the said first holding means (3) for receiving therefrom the second (Tₙ) of the said three consecutive measurement values and also connected to the said second multiplying means (4₁) for receiving therefrom the said predetermined minimum rear margin reference value (A₂Tₙ₋₁), and operable to generate a second detection signal if that second measurement value (Tₙ) is greater than or equal to that reference value (A₂Tₙ₋₁);
third multiplying means (2_{1b}) connected to the said output of the said second holding means (5) for receiving therefrom the first (Tₙ₋₁) of the said three consecutive measurement values and operable to multiply that first measurement value by a third constant (A₃) to produce the said predetermined rear black frame reference value (A₃Tₙ₋₁);
third comparator means (6₁), connected to the said measuring means (1) for receiving therefrom the third (Tₙ₊₁) of the said three consecutive measurement values and also connected to the said third multiplying means (2_{1b}) for receiving therefrom the said predetermined rear black frame reference value (A₃Tₙ₋₁), and operable to generate a third detection signal if that third measurement value (Tₙ₊₁) is greater than or equal to that reference value (A₃Tₙ₋₁);
fourth multiplying means (2₃ₐ) connected to the said output of the said measuring means (1) for receiving therefrom the said third (Tₙ₊₁) of the said three consecutive measurement values and operable to multiply that third measurement value by a fourth constant (A₁′) to produce the said predetermined normal front margin reference value (A₁′Tₙ₊₁);
fourth comparator means (2₄), connected to the said output of the said first holding means (3) for receiving therefrom the said second (Tₙ) of the said three consecutive measurement values and also connected to the said fourth multiplying means (2₃ₐ) for receiving therefrom the said predetermined normal front margin reference value (A₁′Tₙ₊₁), and operable to generate a fourth detection signal if that second measurement value (Tₙ) is greater than or equal to that reference value (A₁′Tₙ₊₁);
fifth multiplying means (4₃) connected to the said measuring means (1) for receiving therefrom the third (Tₙ₊₁) of the said three consecutive measurement values and operable to multiply that third measurement value by a fifth constant (A₂′) to produce the said predetermined minimum front margin reference value (A₂′Tₙ₊₁);
fifth comparator means (4₄), connected to the output of the said first holding means (3) for receiving therefrom the second (Tₙ) of the said three consecutive values and also connected to the said fifth multiplying means (4₃) for receiving therefrom the said predetermined minimum front margin reference value (A_{2′}Tₙ₊₁), and operable to generate a fifth detection signal if that second measurement value (Tₙ) is greater than or equal to that reference value (A₂′Tₙ₊₁);
sixth multiplying means (2_{3b}) connected to the said measuring means (1) for receiving therefrom the said third (Tₙ₊₁) of the said three consecutive measurement values and operable to multiply that third measurement value by a sixth constant (A₃′) to produce the said predetermined front black frame reference value (A₃′Tₙ₊₁);
sixth comparator means (6₂), connected to the said output of the said second holding means (5) for receiving therefrom the said first (Tₙ₋₁) of the said three consecutive measurement values and also connected to the said sixth multiplying means (2_{3b}) for receiving therefrom the said predetermined front black frame reference value (A₃′Tₙ₊₁), and operable to generate a sixth detection signal if that first measurement value (Tₙ₋₁) is greater than or equal to that reference value (A₃′Tₙ₊₁); and
logic means (8, 10, 28, 30, 32) connected to the said first to sixth comparator means for receiving therefrom the said first to sixth detection signals and operable to generate the said margin detection signal in response to the said first detection signal, or to the said fourth detection signal, or to the said second and third detection signals, or to the said fifth and sixth detection signals.

18. Bar code reading apparatus as claimed in claim 16 or 17, wherein the said logic means comprise:
a first AND gate (8) having two inputs connected respectively for receiving the said second and third detection signals and also having an output connected to one input of a first OR gate (10) the other input of which is connected for receiving the said first detection signal;
a second AND gate (28) having two inputs connected respectively for receiving the said fifth and sixth detection signals and also having an output connected to one input of a second OR gate (30) the other input of which is connected for receiving the said fourth detection signal; and
a third OR gate (32) having two inputs connected respectively to the respective outputs of the said first and second OR gates (10, 30), which third OR gate generates at its output the said margin detection signal.

## Patentansprüche

1. Strichkodelesevorrichtung zum Lesen eines Strich kodes mit einem Zeichenstrich und einem Schutzstrich, dem ein hinterer Randbereich folgt, welche Vorrichtung umfaßt:
ein Scanmittel (20, 21) zum Scannen solch eines Strichkodes und zum Erzeugen eines Impulssignals, das dem Strichkode entspricht;
ein Meßmittel (1), das mit dem genannten Scanmittel verbunden ist, zum Empfangen des genannten Impulssignals, und das betriebsfähig ist, um jenes Signal zu verwenden, um eine Serie von Meßwerten (..., Tₙ₋₁, Tₙ, Tₙ₊₁, ...) zu erzeugen, die dem Muster von Strichen quer über den Strichkode entsprechen, von welchen Meßwerten jeder die kombinierte Breite von zwei konsekutiven Strichen in dem Strichkode verkörpert, von welchen Strichen einer schwarz und der andere weiß ist, wobei der zweite der Striche von einem Meßwert der erste Strich von dem nächsten Meßwert in der Serie ist; und
ein Randdetektionsmittel (2, 3, 4, 5, 6, 8, 10), das zum Verarbeiten der genannten Meßwerte der genannten Serie angeordnet ist und betriebsfähig ist, um ein Randdetektionssignal zu erzeugen, entweder beim Detektieren, daß einer jener Werte (Tₙ) größer als oder gleich einem vorbestimmten normalen Hinterrandreferenzwert (zum Beispiel 3,5 Tₙ₋₁) ist, oder beim Detektieren, daß bei zwei konsekutiven Meßwerten (Tₙ, Tₙ₊₁) der genannten Serie der zweite (Tₙ₊₁) jener zwei Werte größer als oder gleich einem vorbestimmten Referenzwert des hinteren schwarzen Rahmens (zum Beispiel 3 Tₙ₋₁) ist und der erste (Tₙ) jener zwei Werte größer als oder gleich einem vorbestimmten minimalen Hinterrandreferenzwert (zum Beispiel 1,25 Tₙ₋₁) ist, der kleiner als der genannte normale Hinterrandreferenzwert ist.

2. Strichkodelesevorrichtung nach Anspruch 1, bei der der genannte vorbestimmte Referenzwert des hinteren schwarzen Rahmens gleich dem genannten vorbestimmten normalen Hinterrandreferenzwert ist.

3. Strichkodelesevorrichtung nach Anspruch 1 oder 2, bei der das genannte Randdetektionsmittel (2, 3, 4, 5, 6, 8, 10) umfaßt:
ein erstes Detektionsmittel (2), das mit dem genannten Meßmittel (1) operativ verbunden ist, zum Empfangen der genannten Meßwerte von ihm, und das betriebsfähig ist, um ein erstes Detektionssignal zu erzeugen, beim Detektieren, daß einer jener Werte (Tₙ) größer als oder gleich dem genannten vorbestimmten normalen Hinterrandreferenzwert (zum Beispiel 3,5 Tₙ₋₁) ist;
ein zweites Detektionsmittel (4), das mit dem genannten Meßmittel (1) auch operativ verbunden ist, zum Empfangen der genannten Meßwerte von ihm, und das betriebsfähig ist, um ein zweites Detektionssignal zu erzeugen, beim Detektieren, daß einer jener Werte (Tₙ) größer als oder gleich dem genannten vorbestimmten minimalen Hinterrandreferenzwert (zum Beispiel 1,25 Tₙ₋₁) ist;
ein drittes Detektionsmittel (6), das mit dem genannten Meßmittel auch operativ verbunden ist, zum Empfangen der genannten Meßwerte von ihm, und das betriebsfähig ist, um ein drittes Detektionssignal zu erzeugen, beim Detektieren, daß einer jener Werte (Tₙ₊₁) größer als oder gleich dem genannten vorbestimmten Referenzwert des hinteren schwarzen Rahmens (zum Beispiel 3 Tₙ₋₁) ist; und
ein Logikmittel (8, 10), das mit den genannten ersten, zweiten und dritten Detektionsmitteln (2, 4, 6) verbunden ist, zum Empfangen der genannten ersten, zweiten und dritten Detektionssignale von ihnen, und das betriebsfähig ist, um das genannte Randdetektionssignal zu erzeugen, entweder als Reaktion auf das genannte erste Detektionssignal oder als Reaktion auf sowohl das genannte zweite Detektionssignal bezüglich des genannten ersten (Tₙ) der genannten zwei konsekutiven Meßwerte (Tₙ, Tₙ₊₁) als auch das genannte dritte Detektionssignal bezüglich des zweiten (Tₙ₊₁) von jenen zwei Werten.

4. Strichkodelesevorrichtung nach Anspruch 3, bei der das genannte Randdetektionsmittel (2, 3, 4, 5, 6, 8, 10) ferner jeweilige erste und zweite Haltemittel (3, 5) umfaßt, von denen jedes einen Eingang zum sequentiellen Empfangen der genannten Meßwerte der genannten Serie hat und betriebsfähig ist, um jeden neuen Meßwert zu halten, der an dem genannten Eingang empfangen wird, während an einem Ausgang von ihm der Meßwert abgegeben wird, der an dem genannten Eingang vorher empfangen wurde, bis der nächste Meßwert der Serie an dem genannten Eingang empfangen wird;
welches Meßmittel (1) mit dem genannten Eingang des genannten ersten Haltemittels (3) und mit dem genannten dritten Detektionsmittel (6) verbunden ist, und welcher Ausgang des ersten Haltemittels (3) mit dem genannten Eingang des genannten zweiten Haltemittels (5) und mit den genannten ersten und zweiten Detektionsmitteln (2, 4) verbunden ist, so daß, wenn der genannte zweite (Tₙ₊₁) der genannten zwei konsekutiven Meßwerte an dem genannten Eingang des genannten ersten Haltemittels (3) und durch das genannte dritte Detektionsmittel (6) empfangen wird, der erste (Tₙ) von jenen zwei Werten von dem genannten Ausgang des ersten Haltemittels (3) an die genannten ersten und zweiten Detektionsmittel (2, 4) abgegeben wird und der Meßwert (Tₙ₋₁), der jenem ersten Wert (Tₙ) unmittelbar vorausgeht, von dem genannten Ausgang des genannten zweiten Haltemittels (5) abgegeben wird, welcher unmittelbar vorausgehende Wert (Tₙ₋₁) durch das genannte Randdetektionsmittel verwendet wird, um die genannten Referenzwerte des normalen Hinterrandes, minimalen Hinterrandes und hinteren schwarzen Rahmens einzustellen.

5. Strichkodelesevorrichtung nach Anspruch 4, bei der:
das genannte erste Detektionsmittel (2) ein Multipliziermittel (2₁ₐ) umfaßt, das mit dem genannten Ausgang des genannten zweiten Haltemittels (5) verbunden ist, zum Multiplizieren des unmittelbar vorausgehenden Meßwertes (Tₙ₋₁) mit einer ersten Konstante (A₁), um den genannten vorbestimmten normalen Hinterrandreferenzwert (A₁Tₙ₋₁) zu erzeugen, und ein Komparatormittel (2₂) zum Erzeugen des genannten ersten Detektionssignals, falls der genannte erste (Tₙ) der genannten zwei konsekutiven Meßwerte größer als oder gleich jenem Referenzwert (A₁Tₙ₋₁) ist;
das genannte zweite Detektionsmittel (4) ein Multipliziermittel (4₁) umfaßt, das mit dem genannten Ausgang des genannten zweiten Haltemittels (5) verbunden ist, zum Multiplizieren des genannten unmittelbar vorausgehenden Meßwertes (Tₙ₋₁) mit einer zweiten Konstante (A₂), um den genannten vorbestimmten minimalen Hinterrandreferenzwert (A₂Tₙ₋₁) zu erzeugen, und ein Komparatormittel (4₂) zum Erzeugen des genannten zweiten Detektionssignals, falls der genannte erste (Tₙ) der genannten zwei konsekutiven Meßwerte größer als oder gleich jenem Referenzwert (A₂Tₙ₋₁) ist; und
das genannte dritte Detektionsmittel (6) ein Multipliziermittel (2_{1b}) umfaßt, das mit dem genannten Ausgang des genannten zweiten Haltemittels (5) verbunden ist, zum Multiplizieren des genannten unmittelbar vorausgehenden Meßwertes (Tₙ₋₁) mit einer dritten Konstante (A₃), um den genannten vorbestimmten Referenzwert des hinteren schwarzen Rahmens (A₃Tₙ₋₁) zu erzeugen, und ein Komparatormittel (6₁) zum Erzeugen des genannten dritten Detektionssignals, falls der genannte zweite (Tₙ₊₁) der genannten zwei konsekutiven Meßwerte größer als oder gleich jenem Referenzwert (A₃Tₙ₋₁) ist.

6. Strichkodelesevorrichtung nach Anspruch 4, bei der:
das genannte erste Detektionsmittel (2) ein Multipliziermittel (2₁) umfaßt, das mit dem genannten Ausgang des genannten zweiten Haltemittels (5) verbunden ist, zum Multiplizieren des genannten unmittelbar vorausgehenden Meßwertes (Tₙ₋₁) mit einer ersten Konstante (A₁), um den genannten vorbestimmten normalen Hinterrandreferenzwert (A₁Tₙ₋₁) zu erzeugen, und ein Komparatormittel (2₂) zum Erzeugen des genannten ersten Detektionssignals, falls der genannte erste (Tₙ) der genannten zwei konsekutiven Meßwerte größer als oder gleich jenem Referenzwert (A₁Tₙ₋₁) ist;
das genannte zweite Detektionsmittel (4) ein Multipliziermittel (4₁) umfaßt, das mit dem genannten Ausgang des genannten zweiten Haltemittels (5) verbunden ist, zum Multiplizieren des genannten unmittelbar vorausgehenden Meßwertes (Tₙ₋₁) mit einer zweiten Konstante (A₂), um den genannten vorbestimmten minimalen Hinterrandreferenzwert (A₂Tₙ₋₁) zu erzeugen, und ein Komparatormittel (4₂) zum Erzeugen des genannten zweiten Detektionssignals, falls der genannte erste (Tₙ) der genannten zwei konsekutiven Meßwerte größer als oder gleich jenem Referenzwert (A₂Tₙ₋₁) ist; und
das genannte dritte Detektionsmittel (6) mit dem genannten Multipliziermittel (2₁) des genannten ersten Detektionsmittels (2) verbunden ist, zum Empfangen des genannten normalen Hinterrandreferenzwertes (A₁Tₙ₋₁) von ihm, und ein Komparatormittel (6₁) umfaßt, zum Erzeugen des genannten dritten Detektionssignals, falls der genannte zweite (Tₙ₊₁) der genannten zwei konsekutiven Meßwerte größer als oder gleich jenem Referenzwert (A₁Tₙ₋₁) ist.

7. Strichkodelesevorrichtung zum Lesen eines Strichkodes mit einem vorderen Randbereich, dem ein Schutzstrich und ein Zeichenstrich folgt, welche Vorrichtung umfaßt:
ein Scanmittel (20, 21) zum Scannen solch eines Strichkodes und zum Erzeugen eines Impulssignals, das dem Strichkode entspricht;
ein Meßmittel (1), das mit dem genannten Scanmittel verbunden ist, zum Empfangen des genannten Impulssignals, und das betriebsfähig ist, um jenes Signal zu verwenden, um eine Serie von Meßwerten (...., Tₙ₋₁, Tₙ, Tₙ₊₁, ...) zu erzeugen, die dem Muster von Strichen quer über den Strichkode entsprechen, von welchen Meßwerten jeder die kombinierte Breite von zwei konsekutiven Strichen in dem Strichkode verkörpert, von welchen Strichen einer schwarz und der andere weiß ist, wobei der zweite der Striche von einem Meßwert der erste Strich des nächsten Meßwertes in der Serie ist; und
ein Randdetektionsmittel (2, 3, 4, 5, 6, 28, 30), das zum Verarbeiten der genannten Meßwerte der genannten Serie angeordnet ist und betriebsfähig ist, um ein Randdetektionssignal zu erzeugen, entweder beim Detektieren, daß einer jener Werte (Tₙ) größer als oder gleich einem vorbestimmten normalen Vorderrandreferenzwert (zum Beispiel 3,5 Tₙ₊₁) ist, oder beim Detektieren, daß bei zwei konsekutiven Meßwerten (Tₙ₋₁, Tₙ) der genannten Serie der erste (Tₙ₋₁) jener zwei Werte größer als oder gleich einem vorbestimmten Referenzwert des vorderen schwarzen Rahmens (zum Beispiel 3 Tₙ₊₁) ist und der zweite (Tₙ) jener zwei Werte größer als oder gleich einem vorbestimmten minimalen Vorderrandreferenzwert (zum Beispiel 1,25 Tₙ₊₁) ist, der kleiner als der genannte normale Vorderrandreferenzwert ist.

8. Strichkodelesevorrichtung nach Anspruch 7, bei der der genannte Referenzwert des vorderen schwarzen Rahmens gleich dem genannten normalen Vorderrandreferenzwert ist.

9. Strichkodelesevorrichtung nach Anspruch 7 oder 8, bei der das genannte Randdetektionsmittel (2, 3, 4, 5, 6, 28, 30) umfaßt:
ein erstes Detektionsmittel (2), das mit dem genannten Meßmittel (1) operativ verbunden ist, zum Empfangen der genannten Meßwerte von ihm, und das betriebsfähig ist, um ein erstes Detektionssignal zu erzeugen, beim Detektieren, daß einer jener Werte (Tₙ) größer als oder gleich dem genannten vorbestimmten normalen Vorderrandreferenzwert (zum Beispiel 3,5 Tₙ₊₁) ist;
ein zweites Detektionsmittel (4), das mit dem genannten Meßmittel (1) auch operativ verbunden ist, zum Empfangen der genannten Meßwerte von ihm, und das betriebsfähig ist, um ein zweites Detektionssignal zu erzeugen, beim Detektieren, daß einer jener Werte (Tₙ) größer als oder gleich dem genannten vorbestimmten minimalen Vorderrandreferenzwert (zum Beispiel 1,25 Tₙ₊₁) ist;
ein drittes Detektionsmittel (6), das mit dem genannten Meßmittel auch operativ verbunden ist, zum Empfangen der genannten Meßwerte von ihm, und das betriebsfähig ist, um ein drittes Detektionssignal zu erzeugen, beim Detektieren, daß einer jener Werte (Tₙ₋₁) größer als oder gleich dem genannten vorbestimmten Referenzwert des vorderen schwarzen Rahmens (zum Beispiel 3 Tₙ₊₁) ist; und
ein Logikmittel (28, 30), das mit den genannten ersten, zweiten und dritten Detektionsmitteln (2, 4, 6) verbunden ist, zum Empfangen der genannten ersten, zweiten und dritten Detektionssignale von ihnen, und das betriebsfähig ist, um das genannte Randdetektionssignal zu erzeugen, entweder als Reaktion auf das genannte erste Detektionssignal oder als Reaktion auf das genannte zweite Detektionssignal bezüglich des zweiten (Tₙ) der genannten zwei konsekutiven Meßwerte und das genannte dritte Detektionssignal bezüglich des ersten (Tₙ₋₁) von jenen zwei Werten.

10. Strichkodelesevorrichtung nach Anspruch 9, bei der das genannte Randdetektionsmittel (2, 3, 4, 5, 6, 28, 30) ferner jeweilige erste und zweite Haltemittel (3, 5) umfaßt, von denen jedes einen Eingang zum sequentiellen Empfangen der genannten Meßwerte der genannten Serie hat und betriebsfähig ist, um jeden neuen Meßwert zu halten, der an dem genannten Eingang empfangen wird, während an einem Ausgang von ihm der Meßwert abgegeben wird, der an dem genannten Eingang vorher empfangen wurde, bis der nächste Meßwert der Serie an dem genannten Eingang empfangen wird;
welches Meßmittel (1) mit dem genannten Eingang des genannten ersten Haltemittels (3) verbunden ist, welcher Ausgang des ersten Haltemittels (3) mit dem genannten Eingang des genannten zweiten Haltemittels (5) und mit den genannten ersten und zweiten Detektionsmitteln (2, 4) verbunden ist, und welcher Ausgang des genannten zweiten Haltemittels (5) mit dem genannten dritten Detektionsmittel (6) verbunden ist, so daß, wenn der Meßwert (Tₙ₊₁), der dem genannten zweiten (Tₙ) der genannten zwei konsekutiven Meßwerte unmittelbar folgt, an dem genannten Eingang des genannten ersten Haltemittels (3) empfangen wird, jener zweite (Tₙ) von dem genannten Ausgang des ersten Haltemittels (3) an die genannten ersten und zweiten Detektionsmittel (2, 4) abgegeben wird und der erste jener zwei Werte (Tₙ₋₁) von dem genannten Ausgang des genannten zweiten Haltemittels (5) an das genannte dritte Detektionsmittel (5) abgegeben wird, welcher unmittelbar folgende Wert (Tₙ₊₁) durch das genannte Randdetektionsmittel verwendet wird, um die genannten Referenzwerte des normalen Vorderrandes, minimalen Vorderrandes und vorderen schwarzen Rahmens einzustellen.

11. Strichkodelesevorrichtung nach Anspruch 10, bei der:
das genannte erste Detektionsmittel (2) ein Multipliziermittel (2₃ₐ) umfaßt, das mit dem genannten Meßmittel (1) verbunden ist, zum Multiplizieren des genannten unmittelbar folgenden Meßwertes (Tₙ₊₁) mit einer ersten Konstante (A₁′), um den genannten vorbestimmten normalen Vorderrandreferenzwert (A₁′Tₙ₊₁) zu erzeugen, und ein Komparatormittel (2₄) zum Erzeugen des genannten ersten Detektionssignals, falls der genannte zweite (Tₙ) der genannten zwei konsekutiven Meßwerte größer als oder gleich jenem Referenzwert (A₁′Tₙ₊₁) ist;
das genannte zweite Detektionsmittel (4) ein Multipliziermittel (4₃) umfaßt, das mit dem genannten Meßmittel (1) verbunden ist, zum Multiplizieren des genannten unmittelbar folgenden Meßwertes (Tₙ₊₁) mit einer zweiten Konstante (A₂′), um den genannten vorbestimmten minimalen Vorderrandreferenzwert (A₂′Tₙ₊₁) zu erzeugen, und ein Komparatormittel (4₄) zum Erzeugen des genannten zweiten Detektionssignals, falls der genannte zweite (Tₙ) der genannten zwei konsekutiven Meßwerte größer als oder gleich jenem Referenzwert (A₂′Tₙ₊₁) ist; und
das genannte dritte Detektionsmittel (6) ein Multipliziermittel (2_{3b}) umfaßt, das mit dem genannten Meßmittel (1) verbunden ist, zum Multiplizieren des genannten unmittelbar folgenden Meßwertes (Tₙ₊₁) mit einer dritten Konstante (A₃′), um den genannten vorbestimmten Referenzwert des vorderen schwarzen Rahmens (A₃′Tₙ₊₁) zu erzeugen, und ein Komparatormittel (6₂) zum Erzeugen des genannten dritten Detektionssignals, falls der genannte erste (Tₙ₋₁) der genannten zwei konsekutiven Meßwerte größer als oder gleich jenem Referenzwert (A₃′Tₙ₊₁) ist.

12. Strichkodelesevorrichtung nach Anspruch 10, bei der:
das genannte erste Detektionsmittel (2) ein Multipliziermittel (2₃) umfaßt, das mit dem genannten Meßmittel (1) verbunden ist, zum Multiplizieren des genannten unmittelbar folgenden Meßwertes (Tₙ₊₁) mit einer ersten Konstante (A₁′), um den genannten vorbestimmten normalen Vorderrandreferenzwert (A₁′Tₙ₊₁) zu erzeugen, und ein Komparatormittel (2₄) zum Erzeugen des genannten ersten Detektionssignals, falls der genannte zweite (Tₙ) der genannten zwei konsekutiven Meßwerte größer als oder gleich jenem Referenzwert (A₁′Tₙ₊₁) ist;
das genannte zweite Detektionsmittel (4) ein Multipliziermittel (4₃) umfaßt, das mit dem genannten Meßmittel (1) verbunden ist, zum Multiplizieren des genannten unmittelbar folgenden Meßwertes (Tₙ₊₁) mit einer zweiten Konstante (A₂′), um den genannten vorbestimmten minimalen Vorderrandreferenzwert (A₂′Tₙ₊₁) zu erzeugen, und ein Komparatormittel (4₄) zum Erzeugen des genannten zweiten Detektionssignals, falls der genannte zweite (Tₙ) der genannten zwei konsekutiven Meßwerte größer als oder gleich jenem Referenzwert (A₂′Tₙ₊₁) ist; und
das genannte dritte Detektionsmittel (6) mit dem genannten Multipliziermittel (2₃) des genannten ersten Detektionsmittels (2) verbunden ist, zum Empfangen des genannten normalen Vorderrandreferenzwertes (A₁′Tₙ₊₁) von ihm, und ein Komparatormittel (6₂) umfaßt, zum Erzeugen des genannten dritten Detektionssignals, falls der genannte erste (Tₙ₋₁) der genannten zwei konsekutiven Meßwerte größer als oder gleich jenem Referenzwert (A₁′Tₙ₊₁) ist.

13. Strichkodelesevorrichtung nach irgendeinem der Ansprüche 5, 6, 11 und 12, bei der das genannte Logikmittel ein UND-Gatter (8, 28) mit zwei Eingängen umfaßt, die jeweilig mit den genannten Komparatormitteln der zweiten und dritten Detektionsmittel (4, 6) verbunden sind, zum Empfangen der genannten zweiten und dritten Detektionssignale von ihnen, und auch mit einem Ausgang, der mit einem Eingang eines ODER-Gatters (10, 30) verbunden ist, dessen anderer Eingang mit dem genannten Komparatormittel des genannten ersten Detektionsmittels (2) verbunden ist, zum Empfangen des genannten ersten Detektionssignals von ihm, welches ODER-Gatter an seinem Ausgang das genannte Randdetektionssignal erzeugt.

14. Strichkodelesevorrichtung nach Anspruch 1 oder 2, zum Lesen eines Strichkodes, der auch einen vorderen Randbereich hat, dem ein Schutzstrich und ein Zeichenstrich folgt, bei der das genannte Randdetektionsmittel (2, 3, 4, 5, 6, 8, 10, 28, 30) auch betriebsfähig ist, um das genannte Randdetektionssignal zu erzeugen, entweder beim Detektieren, daß einer der genannten Meßwerte (Tₙ) größer als oder gleich einem vorbestimmten normalen Vorderrandreferenzwert (zum Beispiel 3,5 Tₙ₊₁) ist, oder beim Detektieren, daß bei zwei konsekutiven Meßwerten (Tₙ₋₁, Tₙ) der genannten Serie der erste (Tₙ₋₁) jener zwei Werte größer als oder gleich einem vorbestimmten Referenzwert des vorderen schwarzen Rahmens (zum Beispiel 3 Tₙ₊₁) ist und der zweite (Tₙ) jener zwei Werte größer als oder gleich einem vorbestimmten minimalen Vorderrandreferenzwert (zum Beispiel 1,25 Tₙ₊₁) ist, der kleiner als der genannte normale Vorderrandreferenzwert ist.

15. Strichkodelesevorrichtung nach Anspruch 14, bei der der genannte vorbestimmte Referenzwert des vorderen schwarzen Randes gleich dem genannten vorbestimmten normalen Vorderrandreferenzwert ist.

16. Strichkodelesevorrichtung nach Anspruch 14 oder 15, bei der das genannte Randdetektionsmittel (2, 3, 4, 5, 6, 8, 10, 28, 30, 32) umfaßt:
jeweilige erste und zweite Haltemittel (3, 5), von denen jedes einen Eingang zum sequentiellen Empfangen der genannten Meßwerte der genannten Serie hat und betriebsfähig ist, um jeden neuen Meßwert zu halten, der an dem genannten Eingang empfangen wird, während an einem Ausgang von ihm der Meßwert abgegeben wird, der an dem genannten Eingang vorher empfangen wurde, bis der nächste Meßwert der Serie an dem genannten Eingang empfangen wird, welches Meßmittel (1) mit dem genannten Eingang des genannten ersten Haltemittels (3) verbunden ist und welcher Ausgang des ersten Haltemittels (3) mit dem genannten Eingang des genannten zweiten Haltemittels (5) verbunden ist, so daß, wenn der dritte (Tₙ₊₁) von drei konsekutiven Meßwerten an dem genannten Eingang des genannten ersten Haltemittels (3) empfangen wird, der zweite (Tₙ) von jenen drei Werten von dem genannten Ausgang des ersten Haltemittels (3) abgegeben wird und der erste von jenen drei Werten (Tₙ₋₁) von dem genannten Ausgang des genannten zweiten Haltemittels (5) abgegeben wird;
ein erstes Multipliziermittel (2₁), das mit dem genannten Ausgang des genannten zweiten Haltemittels (5) verbunden ist, zum Empfangen des ersten (Tₙ₋₁) der genannten drei konsekutiven Meßwerte von ihm, und das betriebsfähig ist, um jenen ersten Meßwert mit einer ersten Konstante (A₁) zu multiplizieren, um den genannten vorbestimmten normalen Hinterrandreferenzwert (A₁Tₙ₋₁) zu erzeugen;
ein erstes Komparatormittel (2₂), das mit dem genannten Ausgang des genannten ersten Haltemittels (3) verbunden ist, zum Empfangen des zweiten (Tₙ) der genannten drei konsekutiven Meßwerte von ihm, und auch mit dem genannten ersten Multipliziermittel (2₁) verbunden ist, zum Empfangen des genannten vorbestimmten normalen Hinterrandreferenzwertes (A₁Tₙ₋₁) von ihm, und das betriebsfähig ist, um ein erstes Detektionssignal zu erzeugen, falls jener zweite Meßwert größer als oder gleich jenem Referenzwert (A₁Tₙ₋₁) ist;
ein zweites Multipliziermittel (4₁), das mit dem genannten Ausgang des genannten zweiten Haltemittels (5) verbunden ist, zum Empfangen des ersten (Tₙ₋₁) der genannten drei konsekutiven Meßwerte von ihm, und das betriebsfähig ist, um jenen ersten Meßwert mit einer zweiten Konstante (A₂) zu multiplizieren, um den genannten vorbestimmten minimalen Hinterrandreferenzwert (A₂Tₙ₋₁) zu erzeugen;
ein zweites Komparatormittel (4₂), das mit dem genannten Ausgang des genannten ersten Haltemittels (3) verbunden ist, zum Empfangen des zweiten (Tₙ) der genannten drei konsekutiven Meßwerte von ihm, und auch mit dem genannten zweiten Multipliziermittel (4₁) verbunden ist, zum Empfangen des genannten vorbestimmten minimalen Hinterrandreferenzwertes (A₂Tₙ₋₁) von ihm, und das betriebsfähig ist, um ein zweites Detektionssignal zu erzeugen, falls jener zweite Meßwert (Tₙ) größer als oder gleich jenem Referenzwert (A₂Tₙ₋₁) ist;
ein drittes Komparatormittel (6₁), das mit dem genannten Meßmittel (1) verbunden ist, zum Empfangen des dritten (Tₙ₊₁) der genannten drei konsekutiven Meßwerte von ihm, und auch mit dem genannten ersten Multipliziermittel (2₁) verbunden ist, zum Empfangen des genannten vorbestimmten normalen Hinterrandreferenzwertes (A₁Tₙ₋₁) von ihm, und das betriebsfähig ist, um ein drittes Detektionssignal zu erzeugen, falls jener dritte Meßwert (Tₙ₊₁) größer als oder gleich jenem Referenzwert (A₁Tₙ₋₁) ist;
ein drittes Multipliziermittel (2₃), das mit dem genannten Meßmittel (1) verbunden ist, zum Empfangen des genannten dritten (Tₙ₊₁) der genannten drei konsekutiven Meßwerte von ihm, und das betriebsfähig ist, um jenen dritten Meßwert mit einer dritten Konstante (A₁′) zu multiplizieren, um den genannten vorbestimmten normalen Vorderrandreferenzwert (A₁′Tₙ₊₁) zu erzeugen;
ein viertes Komparatormittel (2₄), das mit dem genannten Ausgang des genannten ersten Haltemittels (3) verbunden ist, zum Empfangen des genannten zweiten (Tₙ) der genannten drei konsekutiven Meßwerte von ihm, und auch mit dem genannten dritten Multipliziermittel (2₃) verbunden ist, zum Empfangen des genannten vorbestimmten normalen Vorderrandreferenzwertes (A₁′Tₙ₊₁) von ihm, und das betriebsfähig ist, um ein viertes Detektionssignal zu erzeugen, falls jener zweite Meßwert (Tₙ) größer als oder gleich jenem Referenzwert (A₁′Tₙ₊₁) ist;
ein viertes Multipliziermittel (4₃), das mit dem genannten Meßmittel (1) verbunden ist, zum Empfangen des dritten (Tₙ₊₁) der genannten drei konsekutiven Meßwerte von ihm, und das betriebsfähig ist, um jenen dritten Meßwert mit einer vierten Konstante (A₂′) zu multiplizieren, um den genannten vorbestimmten minimalen Vorderrandreferenzwert (A₂′Tₙ₊₁) zu erzeugen;
ein fünftes Komparatormittel (4₄), das mit dem Ausgang des genannten ersten Haltemittels (3) verbunden ist, zum Empfangen des zweiten (Tₙ) der genannten drei konsekutiven Meßwerte von ihm, und auch mit dem genannten vierten Multipliziermittel (4₃) verbunden ist, zum Empfangen des genannten vorbestimmten minimalen Vorderrandreferenzwertes (A₂′Tₙ₊₁) von ihm, und das betriebsfähig ist, um ein fünftes Detektionssignal zu erzeugen, falls jener zweite Meßwert (Tₙ) größer als oder gleich jenem Referenzwert (A₂′Tₙ₊₁) ist;
ein sechstes Komparatormittel (6₂), das mit dem genannten Ausgang des genannten zweiten Haltemittels (5) verbunden ist, zum Empfangen des genannten ersten (Tₙ₋₁) der genannten drei konsekutiven Meßwerte von ihm, und auch mit dem genannten dritten Multipliziermittel (2₃) verbunden ist, zum Empfangen des genannten vorbestimmten normalen Vorderrandreferenzwertes (A₁′Tₙ₊₁) von ihm, und das betriebsfähig ist, um ein sechstes Detektionssignal zu erzeugen, falls jener erste Meßwert (Tₙ₋₁) größer als oder gleich jenem Referenzwert (A₁′Tₙ₊₁) ist; und
ein Logikmittel (8, 10, 28, 30, 32), das mit den genannten ersten bis sechsten Komparatormitteln verbunden ist, zum Empfangen der genannten ersten bis sechsten Detektionssignale von ihnen, und das betriebsfähig ist, um das genannte Randdetektionssignal als Reaktion auf das genannte erste Detektionssignal, oder auf das genannte vierte Detektionssignal, oder auf die genannten zweiten und dritten Detektionssignale, oder auf die genannten fünften und sechsten Detektionssignale zu erzeugen.

17. Strichkodelesevorrichtung nach Anspruch 14 oder 15, bei der das genannte Randdetektionsmittel (2, 3, 4, 5, 6, 8, 10, 28, 30, 32) umfaßt:
jeweilige erste und zweite Haltemittel (3, 5), von denen jedes einen Eingang zum sequentiellen Empfangen der genannten Meßwerte der genannten Serie hat und betriebsfähig ist, um jeden neuen Meßwert zu halten, der an dem genannten Eingang empfangen wird, während an einem Ausgang von ihm der Meßwert abgegeben wird, der an dem genannten Eingang vorher empfangen wurde, bis der nächste Meßwert der Serie an dem genannten Eingang empfangen wird, welches Meßmittel (1) mit dem genannten Eingang des genannten ersten Haltemittels (3) verbunden ist, und welcher Ausgang des ersten Haltemittels (3) mit dem genannten Eingang des genannten zweiten Haltemittels (5) verbunden ist, so daß, wenn der dritte (Tₙ₊₁) von drei konsekutiven Meßwerten an dem genannten Eingang des genannten ersten Haltemittels (3) empfangen wird, der zweite (Tₙ) von jenen drei Werten von dem genannten Ausgang des ersten Haltemittels (3) abgegeben wird und der erste von jenen drei Werten (Tₙ₋₁) von dem genannten Ausgang des genannten zweiten Haltemittels (5) abgegeben wird;
ein erstes Multipliziermittel (2₁ₐ), das mit dem genannten Ausgang des genannten zweiten Haltemittels (5) verbunden ist, zum Empfangen des ersten (Tₙ₋₁) der genannten drei konsekutiven Meßwerte von ihm, und das betriebsfähig ist, um jenen ersten Meßwert mit einer ersten Konstante (A₁) zu multiplizieren, um den genannten vorbestimmten normalen Hinterrandreferenzwert (A₁Tₙ₋₁) zu erzeugen;
ein erstes Komparatormittel (2₂), das mit dem genannten Ausgang des genannten ersten Haltemittels (3) verbunden ist, zum Empfangen des zweiten (Tₙ) der genannten drei konsekutiven Meßwerte von ihm, und auch mit dem genannten ersten Multipliziermittel (2₁ₐ) verbunden ist, zum Empfangen des genannten vorbestimmten normalen Hinterrandreferenzwertes (A₁Tₙ₋₁) von ihm, und das betriebsfähig ist, um ein erstes Detektionssignal zu erzeugen, falls jener zweite Meßwert (Tₙ) größer als oder gleich jenem Referenzwert (A₁Tₙ₋₁) ist;
ein zweites Multipliziermittel (4₁), das mit dem genannten Ausgang des genannten zweiten Haltemittels (5) verbunden ist, zum Empfangen des ersten (Tₙ₋₁) der genannten drei konsekutiven Meßwerte von ihm, und das betriebsfähig ist, um jenen ersten Meßwert mit einer zweiten Konstante (A₂) zu multiplizieren, um den genannten vorbestimmten minimalen Hinterrandreferenzwert (A₂Tₙ₋₁) zu erzeugen;
ein zweites Komparatormittel (4₂), das mit dem genannten Ausgang des genannten ersten Haltemittels (3) verbunden ist, zum Empfangen des zweiten (Tₙ) der genannten drei konsekutiven Meßwerte von ihm, und auch mit dem genannten zweiten Multipliziermittel (4₁) verbunden ist, zum Empfangen des genannten vorbestimmten minimalen Hinterrandreferenzwertes (A₂Tₙ₋₁) von ihm, und das betriebsfähig ist, um ein zweites Detektionssignal zu erzeugen, falls jener zweite Meßwert (Tₙ) größer als oder gleich jenem Referenzwert (A₂Tₙ₋₁) ist;
ein drittes Multipliziermittel (2_{1b}), das mit dem genannten Ausgang des genannten zweiten Haltemittels (5) verbunden ist, zum Empfangen des ersten (Tₙ₋₁) der genannten drei konsekutiven Meßwerte von ihm, und das betriebsfähig ist, um jenen ersten Meßwert mit einer dritten Konstante (A₃) zu multiplizieren, um den genannten vorbestimmten Referenzwert des hinteren schwarzen Rahmens (A₃Tₙ₋₁) zu erzeugen);
ein drittes Komparatormittel (6₁), das mit dem genannten Meßmittel (1) verbunden ist, zum Empfangen des dritten (Tₙ₊₁) der genannten drei konsekutiven Meßwerte von ihm, und auch mit dem genannten dritten Multipliziermittel (2_{1b}) verbunden ist, zum Empfangen des genannten vorbestimmten Referenzwertes des hinteren schwarzen Rahmens (A₃Tₙ₋₁) von ihm, und das betriebsfähig ist, um ein drittes Detektionssignal zu erzeugen, falls jener dritte Meßwert (Tₙ₊₁) größer als oder gleich jenem Referenzwert (A₃Tₙ₋₁) ist;
ein viertes Multipliziermittel (2₃ₐ), das mit dem genannten Ausgang des genannten Meßmittels (1) verbunden ist, zum Empfangen des genannten dritten (Tₙ₊₁) der genannten drei konsekutiven Meßwerte von ihm, und das betriebsfähig ist, um jenen dritten Meßwert mit einer vierten Konstante (A₁′) zu multiplizieren, um den genannten vorbestimmten normalen Vorderrandreferenzwert (A₁′Tₙ₊₁) zu erzeugen;
ein viertes Komparatormittel (2₄), das mit dem genannten Ausgang des genannten ersten Haltemittels (3) verbunden ist, zum Empfangen des genannten zweiten (Tₙ) der genannten drei konsekutiven Meßwerte von ihm, und auch mit dem genannten vierten Multipliziermittel (2₃ₐ) verbunden ist, zum Empfangen des genannten vorbestimmten normalen Vorderrandreferenzwertes (A₁′Tₙ₊₁) von ihm, und das betriebsfähig ist, um ein viertes Detektionssignal zu erzeugen, falls jener zweite Meßwert (Tₙ) größer als oder gleich jenem Referenzwert (A₁′Tₙ₊₁) ist;
ein fünftes Multipliziermittel (4₃), das mit dem genannten Meßmittel (1) verbunden ist, zum Empfangen des dritten (Tₙ₊₁) der genannten drei konsekutiven Meßwerte von ihm, und das betriebsfähig ist, um jenen dritten Meßwert mit einer fünften Konstante (A₂′) zu multiplizieren, um den genannten vorbestimmten minimalen Vorderrandreferenzwert (A₂′Tₙ₊₁) zu erzeugen;
ein fünftes Komparatormittel (4₄), das mit dem Ausgang des genannten ersten Haltemittels (3) verbunden ist, zum Empfangen des zweiten (Tₙ) der genannten drei konsekutiven Meßwerte von ihm, und auch mit dem genannten fünften Multipliziermittel (4₃) verbunden ist, zum Empfangen des genannten vorbestimmten minimalen Vorderrandreferenzwertes (A₂′Tₙ₊₁) von ihm, und das betriebsfähig ist, um ein fünftes Detektionssignal zu erzeugen, falls jener zweite Meßwert (Tₙ) größer als oder gleich jenem Referenzwert (A₂′Tₙ₊₁) ist;
ein sechstes Multipliziermittel (2_{3b}), das mit dem genannten Meßmittel (1) verbunden ist, zum Empfangen des genannten dritten (Tₙ₊₁) der genannten drei konsekutiven Meßwerte von ihm, und das betriebsfähig ist, um jenen dritten Meßwert mit einer sechsten Konstante (A₃′) zu multiplizieren, um den genannten vorbestimmten Referenzwert des vorderen schwarzen Rahmens (A₃′Tₙ₊₁) zu erzeugen;
ein sechstes Komparatormittel (6₂), das mit dem genannten Ausgang des genannten zweiten Haltemittels (5) verbunden ist, zum Empfangen des genannten ersten (Tₙ₋₁) der genannten drei konsekutiven Meßwerte von ihm, und auch mit dem genannten sechsten Multipliziermittel (2_{3b}) verbunden ist, zum Empfangen des genannten vorbestimmten Referenzwertes des vorderen schwarzen Rahmens (A₃′Tₙ₊₁) von ihm, und das betriebsfähig ist, um ein sechstes Detektionssignal zu erzeugen, falls jener erste Meßwert (Tₙ₋₁) größer als oder gleich jenem Referenzwert (A₃′Tₙ₊₁) ist; und
ein Logikmittel (8, 10, 28, 30, 32), das mit den ersten bis sechsten Komparatormitteln verbunden ist, zum Empfangen der genannten ersten bis sechsten Detektionssignale von ihnen, und das betriebsfähig ist, um das genannte Randdetektionssignal als Reaktion auf das genannte erste Detektionssignal, oder auf das genannte vierte Detektionssignal, oder auf die genannten zweiten und dritten Detektionssignale, oder auf die genannten fünften und sechsten Detektionssignale zu erzeugen.

18. Strichkodelesevorrichtung nach Anspruch 16 oder 17, bei der das genannte Logikmittel umfaßt:
ein erstes UND-Gatter (8) mit zwei Eingängen, die jeweilig zum Empfangen der genannten zweiten und dritten Detektionssignale verbunden sind, und auch mit einem Ausgang, der mit einem Eingang eines ersten ODER-Gatters (10) verbunden ist, dessen anderer Eingang zum Empfangen des genannten ersten Detektionssignals verbunden ist;
ein zweites UND-Gatter (28) mit zwei Eingängen, die jeweilig zum Empfangen der genannten fünften und sechsten Detektionssignale verbunden sind, und auch mit einem Ausgang, der mit einem Eingang eines zweiten ODER-Gatters (30) verbunden ist, dessen anderer Eingang zum Empfangen des genannten vierten Detektionssignals verbunden ist; und
ein drittes ODER-Gatter (32) mit zwei Eingängen, die jeweilig mit den jeweiligen Ausgängen der genannten ersten und zweiten ODER-Gatter (10, 30) verbunden sind, welches dritte ODER-Gatter an seinem Ausgang das genannte Randdetektionssignal erzeugt.

## Revendications

1. Appareil de lecture de code à barres permettant de lire un code à barres comportant une barre de caractère et une barre de garde suivie par une zone de marge arrière, lequel appareil comprend :
un moyen de balayage (20, 21) pour balayer ce code à barres et pour générer un signal impulsionnel correspondant au code à barres ;
un moyen de mesure (1) connecté audit moyen de balayage pour recevoir ledit signal impulsionnel et pouvant fonctionner pour utiliser ce signal pour produire une série de valeurs de mesure (..., Tₙ₋₁, Tₙ, Tₙ₊₁, ...) correspondant au motif de barres du code à barres, chacune de ces valeurs de mesure représentant la largeur combinée de deux barres consécutives du code à barres, l'une de ces barres étant noire et l'autre étant blanche, la seconde des barres d'une valeur de mesure étant la première barre de la valeur de mesure suivante de la série ; et
un moyen de détection de marge (2, 3, 4, 5, 6, 8, 10) agencé pour traiter lesdites valeurs de mesure de ladite série et pouvant fonctionner pour générer un signal de détection de marge soit suite à la détection du fait que l'une de ces valeurs (Tₙ) est supérieure ou égale à une valeur de référence de marge arrière normale prédéterminée (par exemple 3,5 Tₙ₋₁) soit suite à la détection du fait que pour deux valeurs de mesure consécutives (Tₙ, Tₙ₊₁) de ladite série, la seconde (Tₙ₊₁) de ces valeurs est supérieure ou égale à une valeur de référence de cadre noir arrière prédéterminée (par exemple 3 Tₙ₋₁) et la première (Tₙ) de ces deux valeurs est supérieure ou égale à une valeur de référence de marge arrière minimum prédéterminée (par exemple 1,25 Tₙ₋₁) qui est inférieure à ladite valeur de référence de marge arrière normale.

2. Appareil de lecture de code à barres selon la revendication 1, dans lequel ladite valeur de référence de cadre noir arrière prédéterminée est égale à ladite valeur de référence de marge arrière normale prédéterminée.

3. Appareil de lecture de code à barres selon la revendication 1 ou 2, dans lequel ledit moyen de détection de marge (2, 3, 4, 5, 6, 8, 10) comprend :
un premier moyen de détection (2) connecté de manière opérationnelle audit moyen de mesure (1) pour en recevoir lesdites valeurs de mesure et pouvant fonctionner pour générer un premier signal de détection suite à la détection du fait que l'une de ces valeurs (Tₙ) est supérieure ou égale à ladite valeur de référence de marge arrière normale prédéterminée (par exemple 3,5 Tₙ₋₁) ;
un second moyen de détection (4) également connecté de manière opérationnelle audit moyen de mesure (1) pour en recevoir lesdites valeurs de mesure et pouvant fonctionner pour générer un second signal de détection suite à la détection du fait que l'une de ces valeurs (Tₙ) est supérieure ou égale à ladite valeur de référence de marge arrière minimum prédéterminée (par exemple 1,25 Tₙ₋₁) ;
un troisième moyen de détection (6) également connecté de manière opérationnelle audit moyen de mesure pour en recevoir lesdites valeurs de mesure et pouvant fonctionner pour générer un troisième signal de détection suite à la détection du fait que l'une de ces valeurs (Tₙ₊₁) est supérieure ou égale à ladite valeur de référence de cadre noir arrière prédéterminée (par exemple 3 Tₙ₋₁) ; et
un moyen logique (8, 10) connecté auxdits premier, second et troisième moyens de détection (2, 4, 6) pour en recevoir lesdits premier, second et troisième signaux de détection et pouvant fonctionner pour générer ledit signal de détection de marge soit en réponse audit premier signal de détection soit en réponse à la fois audit second signal de détection en relation avec ladite première (Tₙ) desdites deux valeurs de mesure consécutives (Tₙ, Tₙ₊₁) et audit troisième signal de détection en relation avec la seconde (Tₙ₊₁) de ces deux valeurs.

4. Appareil de lecture de code à barres selon la revendication 3, dans lequel ledit moyen de détection de marge (2, 3, 4, 5, 6, 8, 10) comprend en outre des premier et second moyens de blocage respectifs (3, 5) dont chacun comporte une entrée pour recevoir lesdites valeurs de mesure de ladite série séquentiellement et pouvant fonctionner pour bloquer chaque nouvelle valeur de mesure reçue au niveau de ladite entrée tout en délivrant au niveau de sa sortie la valeur de mesure précédemment reçue au niveau de ladite entrée jusqu'à ce que la valeur de mesure suivante de la série soit reçue au niveau de ladite entrée ;
ledit moyen de mesure (1) étant connecté à ladite entrée dudit premier moyen de blocage (3) et audit troisième moyen de détection (6) et ladite sortie du premier moyen de blocage (3) étant connectée à ladite entrée dudit second moyen de blocage (5) et auxdits premier et second moyens de détection (2, 4) de telle sorte que, lorsque ladite seconde (Tₙ₊₁) desdites deux valeurs de mesure consécutives est reçue au niveau de ladite entrée dudit premier moyen de blocage (3) et par ledit troisième moyen de détection (6), la première (Tₙ) de ces deux valeurs soit délivrée depuis ladite sortie du premier moyen de blocage (3) auxdits premier et second moyens de détection (2, 4) et que la valeur de mesure (Tₙ₋₁) qui précède immédiatement cette première valeur (Tₙ) soit délivrée depuis ladite sortie dudit second moyen de blocage (5), cette valeur immédiatement précédente (Tₙ₋₁) étant utilisée par ledit moyen de détection de marge pour établir lesdites valeurs de référence de marge arrière normale, de marge arrière minimum et de cadre noir arrière.

5. Appareil de lecture de code à barres selon la revendication 4, dans lequel :
ledit premier moyen de détection (2) comprend un moyen de multiplication (2₁ₐ) connecté à ladite sortie dudit second moyen de blocage (5) pour multiplier ladite valeur de mesure immédiatement précédente (Tₙ₋₁) par une première constante (A₁) pour produire ladite valeur de référence de marge arrière normale prédéterminée (A₁Tₙ₋₁), et un moyen de comparateur (2₂) pour générer ledit premier signal de détection si ladite première (Tₙ) desdites deux valeurs de mesure consécutives est supérieure ou égale à cette valeur de référence (A₁Tₙ₋₁) ;
ledit second moyen de détection (4) comprend un moyen de multiplication (4₁) connecté à ladite sortie dudit second moyen de blocage (5) pour multiplier ladite valeur de mesure immédiatement précédente (Tₙ₋₁) par une seconde constante (A₂) pour produire ladite valeur de référence de marge arrière minimum prédéterminée (A₂Tₙ₋₁), et un moyen de comparateur (4₂) pour générer ledit second signal de détection si ladite première (Tₙ) desdites deux valeurs de mesure consécutives est supérieure ou égale à cette valeur de référence (A₂Tₙ₋₁) ; et
ledit troisième moyen de détection (6) comprend un moyen de multiplication (2_{1b}) connecté à ladite sortie dudit second moyen de blocage (5) pour multiplier ladite valeur de mesure immédiatement précédente (Tₙ₋₁) par une troisième constante (A₃) pour produire ladite valeur de référence de cadre noir arrière prédéterminée (A₃Tₙ₋₁), et un moyen de comparateur (6₁) pour générer ledit troisième signal de détection si ladite seconde (Tₙ₊₁) desdites deux valeurs consécutives est supérieure ou égale à cette valeur de référence (A₃Tₙ₋₁).

6. Appareil de lecture de code à barres selon la revendication 4, dans lequel :
ledit premier moyen de détection (2) comprend un moyen de multiplication (2₁) connecté à ladite sortie dudit second moyen de blocage (5) pour multiplier ladite valeur de mesure immédiatement précédente (Tₙ₋₁) par une première constante (A₁) pour produire ladite valeur de référence de marge arrière normale prédéterminée (A₁Tₙ₋₁) et un moyen de comparateur (2₂) pour générer ledit premier signal de détection si ladite première (Tₙ) desdites deux valeurs de mesure consécutives est supérieure ou égale à cette valeur de référence (A₁Tₙ₋₁) ;
ledit second moyen de détection (4) comprend un moyen de multiplication (4₁) connecté à ladite sortie dudit second moyen de blocage (5) pour multiplier ladite valeur de mesure immédiatement précédente (Tₙ₋₁) par une seconde constante (A₂) pour produire ladite valeur de référence de marge arrière minimum prédéterminée (A₂Tₙ₋₁), et un moyen de comparateur (4₂) pour générer ledit second signal de détection si ladite première (Tₙ) desdites deux valeurs de mesure consécutives est supérieure ou égale à cette valeur de référence (A₂Tₙ₋₁) ; et
ledit troisième moyen de détection (6) est connecté audit moyen de multiplication (2₁) dudit premier moyen de détection (2) pour en recevoir ladite valeur de référence de marge arrière normale (A₁Tₙ₋₁) et il comprend un moyen de comparateur (6₁) pour générer ledit troisième signal de détection si ladite second (Tₙ₊₁) desdites deux valeurs de mesure consécutives est supérieure ou égale à cette valeur de référence (A₁Tₙ₋₁).

7. Appareil de lecture de code à barres permettant de lire un code à barres comportant une zone de marge avant suivie par une barre de garde et par une barre de caractère, lequel appareil comprend :
un moyen de balayage (20, 21) pour balayer ce code à barres et pour générer un signal impulsionnel correspondant au code à barres ;
un moyen de mesure (1) connecté audit moyen de balayage pour recevoir ledit signal impulsionnel et pouvant fonctionner pour utiliser ce signal pour produire une série de valeurs de mesure (..., Tₙ₋₁, Tₙ, Tₙ₊₁, ...) correspondant au motif de barres du code à barres, chacune de ces valeurs de mesure représentant la largeur combinée de deux barres consécutives du code à barres, l'une de ces barres étant noire et l'autre étant blanche, la seconde des barres d'une valeur de mesure étant la première barre de la valeur de mesure suivante de la série ; et
un moyen de détection de marge (2, 3, 4, 5, 6, 28, 30) agencé pour traiter lesdites valeurs de mesure de ladite série et pouvant fonctionner pour générer un signal de détection de marge soit suite à la détection du fait que l'une de ces valeurs (Tₙ) est supérieure ou égale à une valeur de référence de marge avant normale prédéterminée (par exemple 3,5 Tₙ₋₁) soit suite à la détection du fait que pour deux valeurs de mesure consécutives (Tₙ₋₁, Tₙ) de ladite série, la première (Tₙ₋₁) de ces valeurs est supérieure ou égale à une valeur de référence de cadre noir avant prédéterminée (par exemple 3 Tₙ₊₁) et la seconde (Tₙ) de ces deux valeurs est supérieure ou égale à une valeur de référence de marge avant minimum prédéterminée (par exemple 1,25 Tₙ₊₁) qui est inférieure à ladite valeur de référence de marge avant normale.

8. Appareil de lecture de code à barres selon la revendication 7, dans lequel ladite valeur de référence de cadre noir avant est égale à ladite valeur de référence de marge avant normale.

9. Appareil de lecture de code à barres selon la revendication 7 ou 8, dans lequel ledit moyen de détection de marge (2, 3, 4, 5, 6, 28, 30) comprend :
un premier moyen de détection (2) connecté de manière opérationnelle audit moyen de mesure (1) pour en recevoir lesdites valeurs de mesure et pouvant fonctionner pour générer un premier signal de détection suite à la détection du fait que l'une de ces valeurs (Tₙ) est supérieure ou égale à ladite valeur de référence de marge avant normale prédéterminée (par exemple 3,5 Tₙ₊₁) ;
un second moyen de détection (4) également connecté de manière opérationnelle audit moyen de mesure (1) pour en recevoir lesdites valeurs de mesure et pouvant fonctionner pour générer un second signal de détection suite à la détection du fait que l'une de ces valeurs (Tₙ) est supérieure ou égale à ladite valeur de référence de marge avant minimum prédéterminée (par exemple 1,25 Tₙ₊₁) ;
un troisième moyen de détection (6) également connecté de manière opérationnelle audit moyen de mesure pour en recevoir lesdites valeurs de mesure et pouvant fonctionner pour générer un troisième signal de détection suite à la détection du fait que l'une de ces valeurs (Tₙ₋₁) est supérieure ou égale à ladite valeur de référence de cadre noir avant prédéterminée (par exemple 3 Tₙ₊₁) ; et
un moyen logique (28, 30) connecté auxdits premier, second et troisième moyens de détection (2, 4, 6) pour en recevoir lesdits premier, second et troisième signaux de détection et pouvant fonctionner pour générer ledit signal de détection de marge soit en réponse audit premier signal de détection soit en réponse audit second signal de détection en relation avec la seconde (Tₙ) desdites deux valeurs de mesure consécutives et audit troisième signal de détection en relation avec la première (Tₙ₋₁) de ces deux valeurs.

10. Appareil de lecture de code à barres selon la revendication 9, dans lequel ledit moyen de détection de marge (2, 3, 4, 5, 6, 28, 30) comprend en outre des premier et second moyens de blocage respectifs (3, 5) dont chacun comporte une entrée pour recevoir lesdites valeurs de mesure de ladite série séquentiellement et pouvant fonctionner pour bloquer chaque nouvelle valeur de mesure reçue au niveau de ladite entrée tout en délivrant au niveau de sa sortie la valeur de mesure précédemment reçue au niveau de ladite entrée jusqu'à ce que la valeur de mesure suivante de la série soit reçue au niveau de ladite entrée ;
ledit moyen de mesure (1) étant connecté à ladite entrée dudit premier moyen de blocage (3), ladite sortie du premier moyen de blocage (3) étant connectée à ladite entrée dudit second moyen de blocage (5) et auxdits premier et second moyens de détection (2, 4), et ladite sortie dudit second moyen de blocage (5) étant connectée audit troisième moyen de détection (6) de telle sorte que, lorsque la valeur de mesure (Tₙ₊₁) qui suit immédiatement ladite seconde (Tₙ) desdites deux valeurs consécutives est reçue au niveau de ladite entrée dudit premier moyen de blocage (3), cette seconde valeur (Tₙ) soit délivrée depuis ladite sortie dudit premier moyen de blocage (3) auxdits premier et second moyens de détection (2, 4) et que la première de ces deux valeurs (Tₙ₋₁) soit délivrée depuis ladite sortie dudit second moyen de blocage (5) audit troisième moyen de détection (5), cette valeur immédiatement suivante (Tₙ₊₁) étant utilisée par ledit moyen de détection de marge pour établir lesdites valeurs de référence de marge avant normale, de marge avant minimum et de cadre noir avant.

11. Appareil de lecture de code à barres selon la revendication 10, dans lequel :
ledit premier moyen de détection (2) comprend un moyen de multiplication (2₃ₐ) connecté audit moyen de mesure (1) pour multiplier ladite valeur de mesure immédiatement suivante (Tₙ₊₁) par une première constante (A₁′) pour produire ladite valeur de référence de marge avant normale prédéterminée (A₁′Tₙ₊₁), et un moyen de comparateur (2₄) pour générer ledit premier signal de détection si ladite seconde (Tₙ) desdites deux valeurs de mesure consécutives est supérieure ou égale à cette valeur de référence (A₁′Tₙ₊₁) ;
ledit second moyen de détection (4) comprend un moyen de multiplication (4₃) connecté audit moyen de mesure (1) pour multiplier ladite valeur de mesure immédiatement suivante (Tₙ₊₁) par une seconde constante (A₂′) pour produire ladite valeur de référence de marge avant minimum prédéterminée (A₂′Tₙ₊₁), et un moyen de comparateur (4₄) pour générer ledit second signal de détection si ladite seconde (Tₙ) desdites deux valeurs de mesure consécutives est supérieure ou égale à cette valeur de référence (A₂′Tₙ₊₁) ; et
ledit troisième moyen de détection (6) comprend un moyen de multiplication (2_{3b}) connecté audit moyen de mesure (1) pour multiplier ladite valeur de mesure immédiatement suivante (Tₙ₊₁) par une troisième constante (A₃′) pour produire ladite valeur de référence de cadre noir avant prédéterminée (A₃′Tₙ₊₁), et un moyen de comparateur (6₂) pour générer ledit troisième signal de détection si ladite première (Tₙ₋₁) desdites deux valeurs de mesure consécutives est supérieure ou égale à cette valeur de référence (A₃′Tₙ₊₁).

12. Appareil de lecture de code à barres selon la revendication 10, dans lequel :
ledit premier moyen de détection (2) comprend un moyen de multiplication (2₃) connecté audit moyen de mesure (1) pour multiplier ladite valeur de mesure immédiatement suivante (Tₙ₊₁) par une première constante (A₁′) pour produire ladite valeur de référence de marge avant normale prédéterminée (A₁′Tₙ₊₁), et un moyen de comparateur (2₄) pour générer ledit premier signal de détection si ladite seconde (Tₙ) desdites deux valeurs de mesure consécutives est supérieure ou égale à cette valeur de référence (A₁′Tₙ₊₁) ;
ledit second moyen de détection (4) comprend un moyen de multiplication (4₃) connecté audit moyen de mesure (1) pour multiplier ladite valeur de mesure immédiatement suivante (Tₙ₊₁) par une seconde constante (A₂′) pour produire ladite valeur de référence de marge avant minimum prédéterminée (A₂′Tₙ₊₁), et un moyen de comparateur (4₄) pour générer ledit second signal de détection si ladite seconde (Tₙ) desdites deux valeurs de mesure consécutives est supérieure ou égale à cette valeur de référence (A₂′Tₙ₊₁) ; et
ledit troisième moyen de détection (6) est connecté audit moyen de multiplication (2₃) dudit premier moyen de détection (2) pour en recevoir ladite valeur de référence de marge avant normale (A₁′Tₙ₊₁) et il comprend un moyen de comparateur (6₂) pour générer ledit troisième signal de détection si ladite première (Tₙ₋₁) desdites deux valeurs de mesure consécutives est supérieure ou égale à cette valeur de référence (A₁′Tₙ₊₁).

13. Appareil de lecture de code à barres selon l'une quelconque des revendications 5, 6, 11 et 12, dans lequel ledit moyen logique comprend une porte ET (8, 28) comportant deux entrées connectées respectivement auxdits moyens de comparateur desdits second et troisième moyens de détection (4, 6) pour en recevoir lesdits second et troisième signaux de détection et comporte également une sortie connectée à une entrée d'une porte OU (10, 30) dont l'autre entrée est connectée audit moyen de comparateur dudit premier moyen de détection (2) pour en recevoir ledit premier signal de détection, laquelle porte OU génère au niveau de sa sortie ledit signal de détection de marge.

14. Appareil de lecture de code à barres selon la revendication 1 ou 2, permettant de lire un code à barres comportant également une zone de marge avant suivie par une barre de garde et par une barre de caractère, dans lequel ledit moyen de détection de marge (2, 3, 4, 5, 6, 8, 10, 28, 30) peut fonctionner également pour générer ledit signal de détection de marge soit suite à la détection du fait que l'une desdites valeurs de mesure (Tₙ) est supérieure ou égale à une valeur de référence de marge avant normale prédéterminée (par exemple 3,5 Tₙ₊₁) soit suite à la détection du fait que pour deux valeurs de mesure consécutives (Tₙ₋₁, Tₙ) de ladite série, la première (Tₙ₋₁) de ces deux valeurs est supérieure ou égale à une valeur de référence de cadre noir avant prédéterminée (par exemple 3 Tₙ₊₁) et la seconde (Tₙ) de ces deux valeurs est supérieure ou égale à une valeur de référence de marge avant minimum prédéterminée (par exemple 1,25 Tₙ₊₁) qui est inférieure à ladite valeur de référence de marge avant normale.

15. Appareil de lecture de code à barres selon la revendication 14, dans lequel ladite valeur de référence de cadre noir avant prédéterminée est égale à ladite valeur de référence de marge avant normale prédéterminée.

16. Appareil de lecture de code à barres selon la revendication 14 ou 15, dans lequel ledit moyen de détection de marge (2, 3, 4, 5, 6, 8, 10, 28, 30, 32) comprend :
des premier et second moyens de blocage respectifs (3, 5) dont chacun comporte une entrée pour recevoir lesdites valeurs de mesure de ladite série séquentiellement et pouvant fonctionner pour bloquer chaque nouvelle valeur de mesure reçue au niveau de ladite entrée tout en délivrant au niveau de sa sortie la valeur de mesure précédemment reçue au niveau de ladite entrée jusqu'à ce que la valeur de mesure suivante de la série soit reçue au niveau de ladite entrée, ledit moyen de mesure (1) étant connecté à ladite entrée dudit premier moyen de blocage (3) et ladite sortie dudit premier moyen de blocage (3) étant connectée à ladite entrée dudit second moyen de blocage (5) de telle sorte que, lorsque la troisième (Tₙ₊₁) de trois valeurs de mesure consécutives est reçue au niveau de ladite entrée du premier moyen de blocage (3), la seconde (Tₙ) de ces trois valeurs soit délivrée depuis ladite sortie dudit premier moyen de blocage (3) et la première de ces trois valeurs (Tₙ₋₁) soit délivrée depuis ladite sortie dudit second moyen de blocage (5) ;
un premier moyen de multiplication (2₁) connecté à ladite sortie dudit second moyen de blocage (5) pour en recevoir la première (Tₙ₋₁) desdites trois valeurs de mesure consécutives et pouvant fonctionner pour multiplier cette première valeur de mesure par une première constante (A₁) pour produire ladite valeur de référence de marge arrière normale prédéterminée (A₁Tₙ₋₁) ;
un premier moyen de comparateur (2₂), connecté à ladite sortie dudit premier moyen de blocage (3) pour en recevoir la seconde (Tₙ) desdites trois valeurs de mesure consécutives et également connecté audit premier moyen de multiplication (2₁) pour en recevoir ladite valeur de référence de marge arrière normale prédéterminée (A₁Tₙ₋₁) et pouvant fonctionner pour générer un premier signal de détection si cette seconde valeur de mesure est supérieure ou égale à cette valeur de référence (A₁Tₙ₋₁) ;
un second moyen de multiplication (4₁) connecté à ladite sortie dudit second moyen de blocage (5) pour en recevoir la première (Tₙ₋₁) desdites trois valeurs de mesure consécutives et pouvant fonctionner pour multiplier cette première valeur de mesure par une seconde constante (A₂) pour produire ladite valeur de référence de marge arrière minimum prédéterminée (A₂Tₙ₋₁) ;
un second moyen de comparateur (4₂) connecté à ladite sortie dudit premier moyen de blocage (3) pour en recevoir la seconde (Tₙ) desdites trois valeurs de mesure consécutives et également connecté audit second moyen de multiplication (4₁) pour en recevoir ladite valeur de référence de marge arrière minimum prédéterminée (A₂Tₙ₋₁) et pouvant fonctionner pour générer un second signal de détection si cette seconde valeur de mesure (Tₙ) est supérieure ou égale à cette valeur de référence (A₂Tₙ₋₁) ;
un troisième moyen de comparateur (6₁) connecté audit moyen de mesure (1) pour en recevoir la troisième (Tₙ₊₁) desdites trois valeurs de mesure consécutives et également connecté audit premier moyen de multiplication (21) pour en recevoir ladite valeur de référence de marge arrière normale prédéterminée (A₁Tₙ₋₁) et pouvant fonctionner pour générer un troisième signal de détection si cette troisième valeur de mesure (Tₙ₊₁) est supérieure ou égale à cette valeur de référence (A₁Tₙ₋₁) ;
un troisième moyen de multiplication (2₃) connecté audit moyen de mesure (1) pour en recevoir ladite troisième (Tₙ₊₁) desdites trois valeurs de mesure consécutives et pouvant fonctionner pour multiplier cette troisième valeur de mesure par une troisième constante (A₁′) pour produire ladite valeur de référence de marge avant normale prédéterminée (A₁′Tₙ₊₁) ;
un quatrième moyen de comparateur (2₄) connecté à ladite sortie dudit premier moyen de blocage (3) pour en recevoir ladite seconde (Tₙ) desdites trois valeurs de mesure consécutives et également connecté audit troisième moyen de multiplication (2₃) pour en recevoir ladite valeur de référence de marge avant normale prédéterminée (A₁′Tₙ₊₁) et pouvant fonctionner pour générer un quatrième signal de détection si cette seconde valeur de mesure (Tₙ) est supérieure ou égale à cette valeur de référence (A₁′Tₙ₊₁) ;
un quatrième moyen de multiplication (4₃) connecté audit moyen de mesure (1) pour en recevoir la troisième (Tₙ₊₁) desdites trois valeurs de mesure consécutives et pouvant fonctionner pour multiplier cette troisième valeur de mesure par une quatrième constante (A₂′) pour produire ladite valeur de référence de marge avant minimum prédéterminée (A₂′Tₙ₊₁) ;
un cinquième moyen de comparateur (4₄) connecté à la sortie dudit premier moyen de blocage (3) pour en recevoir la seconde (Tₙ) desdites trois valeurs de mesure consécutives et également connecté audit quatrième moyen de multiplication (4₃) pour en recevoir ladite valeur de référence de marge avant minimum prédéterminée (A₂′Tₙ₊₁) et pouvant fonctionner pour générer un cinquième signal de détection si cette seconde valeur de mesure (Tₙ) est supérieure ou égale à cette valeur de référence (A₂′Tₙ₊₁) ;
un sixième moyen de comparateur (6₂) connecté à ladite sortie dudit second moyen de blocage (5) pour en recevoir ladite première (Tₙ₋₁) desdites trois valeurs de mesure consécutives et également connecté audit troisième moyen de multiplication (2₃) pour en recevoir ladite valeur de référence de marge avant normale prédéterminée (A₁′Tₙ₊₁) et pouvant fonctionner pour générer un sixième signal de détection si cette première valeur de mesure (Tₙ₋₁) est supérieure ou égale à cette valeur de référence (A₁′Tₙ₊₁) ; et
un moyen logique (8, 10, 28, 30, 32) connecté auxdits premier à sixième moyens de comparateur pour en recevoir lesdits premier à sixième signaux de détection et pouvant fonctionner pour générer ledit signal de détection de marge en réponse audit premier signal de détection ou pour générer ledit quatrième signal de détection ou lesdits second et troisième signaux de détection ou lesdits cinquième et sixième signaux de détection.

17. Appareil de lecture de code à barres selon la revendication 14 ou 15, dans lequel ledit moyen de détection de marge (2, 3, 4, 5, 6, 8, 10, 28, 30, 32) comprend :
des premier et second moyens de blocage respectifs (3, 5) dont chacun comporte une entrée pour recevoir lesdites valeurs de mesure de ladite série séquentiellement et peut fonctionner pour bloquer chaque nouvelle valeur de mesure reçue au niveau de ladite entrée tout en délivrant au niveau de sa sortie la valeur de mesure précédemment reçue au niveau de ladite entrée jusqu'à ce que la valeur de mesure suivante de la série soit reçue au niveau de ladite entrée, ledit moyen de mesure (1) étant connecté à ladite entrée dudit premier moyen de blocage (3) et ladite sortie dudit premier moyen de blocage (3) étant connectée à ladite entrée dudit second moyen de blocage (5) de telle sorte que lorsque la troisième (Tₙ₊₁) de trois valeurs de mesure consécutives est reçue au niveau de ladite entrée dudit premier moyen de blocage (3), la seconde (Tₙ) de ces trois valeurs soit délivrée depuis ladite sortie dudit premier moyen de blocage (3) et que la première de ces trois valeurs (Tₙ₋₁) soit délivrée depuis ladite sortie dudit second moyen de blocage (5) ;
un premier moyen de multiplication (2₁ₐ) connecté à ladite sortie dudit second moyen de blocage (5) pour en recevoir la première (Tₙ₋₁) desdites trois valeurs de mesure consécutives et pouvant fonctionner pour multiplier cette première valeur de mesure par une première constante (A₁) pour produire ladite valeur de référence de marge arrière normale prédéterminée (A₁Tₙ₋₁) ;
un premier moyen de comparateur (2₂) connecté à ladite sortie dudit premier moyen de blocage (3) pour en recevoir la seconde (Tₙ) desdites trois valeurs de mesure consécutives et également connecté audit premier moyen de multiplication (2₁ₐ) pour en recevoir ladite valeur de référence de marge arrière normale prédéterminée (A₁Tₙ₋₁) et pouvant fonctionner pour générer un premier signal de détection si cette seconde valeur de mesure (Tₙ) est supérieure ou égale à cette valeur de référence (A₁Tₙ₋₁) ;
un second moyen de multiplication (4₁) connecté à ladite sortie dudit second moyen de blocage (5) pour en recevoir la première (Tₙ₋₁) desdites trois valeurs de mesure consécutives et pouvant fonctionner pour multiplier cette première valeur de mesure par une seconde constante (A₂) pour produire ladite valeur de référence de marge arrière minimum prédéterminée (A₂Tₙ₋₁) ;
un second moyen de comparateur (4₂) connecté à ladite sortie dudit premier moyen de blocage (3) pour en recevoir la seconde (Tₙ) desdites trois valeurs de mesure consécutives et également connecté audit second moyen de multiplication (4₁) pour en recevoir ladite valeur de référence de marge arrière minimum prédéterminée (A₂Tₙ₋₁) et pouvant fonctionner pour générer un second signal de détection si cette seconde valeur de mesure (Tₙ) est supérieure ou égale à cette valeur de référence (A₂Tₙ₋₁) ;
un troisième moyen de multiplication (2_{1b}) connecté à ladite sortie dudit second moyen de blocage (5) pour en recevoir la première (Tₙ₋₁) desdites trois valeurs de mesure consécutives et pouvant fonctionner pour multiplier cette première valeur de mesure par une troisième constante (A₃) pour produire ladite valeur de référence de cadre noir arrière prédéterminée (A₃Tₙ₋₁) ;
un troisième moyen de comparateur (6₁) connecté audit moyen de mesure (1) pour en recevoir la troisième (Tₙ₊₁) desdites trois valeurs de mesure consécutives et également connecté audit troisième moyen de multiplication (2_{1b}) pour en recevoir ladite valeur de référence de cadre noir arrière prédéterminée (A₃Tₙ₋₁) et pouvant fonctionner pour générer un troisième signal de détection si cette troisième valeur de mesure (Tₙ₊₁) est supérieure ou égale à cette valeur de référence (A₃Tₙ₋₁) ;
un quatrième moyen de multiplication (2₃ₐ) connecté à ladite sortie dudit moyen de mesure (1) pour en recevoir ladite troisième (Tₙ₊₁) desdites trois valeurs de mesure consécutives et pouvant fonctionner pour multiplier cette troisième valeur de mesure par une quatrième constante (A₁′) pour produire ladite valeur de référence de marge avant normale prédéterminée A₁′Tₙ₊₁) ;
un quatrième moyen de comparateur (2₄) connecté à ladite sortie dudit premier moyen de blocage (3) pour en recevoir ladite seconde (Tₙ) desdites trois valeurs de mesure consécutives et également connecté audit quatrième moyen de multiplication (2₃ₐ) pour en recevoir ladite valeur de référence de marge avant normale prédéterminée (A₁′Tₙ₊₁) et pouvant fonctionner pour générer un quatrième signal de détection si cette seconde valeur de mesure (Tₙ) est supérieure ou égale à cette valeur de référence (A₁′Tₙ₊₁) ;
un cinquième moyen de multiplication (4₃) connecté audit moyen de mesure (1) pour en recevoir la troisième (Tₙ₊₁) desdites trois valeurs de mesure consécutives et pouvant fonctionner pour multiplier cette troisième valeur de mesure par une cinquième constante (A₂′) pour produire ladite valeur de référence de marge avant minimum prédéterminée (A₂′Tₙ₊₁) ;
un cinquième moyen de comparateur (4₄) connecté à la sortie dudit premier moyen de blocage (3) pour en recevoir la seconde (Tₙ) desdites trois valeurs de mesure consécutives et également connecté audit cinquième moyen de multiplication (4₃) pour en recevoir ladite valeur de référence de marge avant minimum prédéterminée (A₂′Tₙ₊₁) et pouvant fonctionner pour générer un cinquième signal de détection si cette seconde valeur de mesure (Tₙ) est supérieure ou égale à cette valeur de référence (A₂′Tₙ₊₁) ;
un sixième moyen de multiplication (2_{3b}) connecté audit moyen de mesure (1) pour en recevoir ladite troisième (Tₙ₊₁) desdites trois valeurs de mesure consécutives et pouvant fonctionner pour multiplier cette troisième valeur de mesure par une sixième constante (A₃′) pour produire ladite valeur de référence de cadre noir avant prédéterminée (A₃′Tₙ₊₁) ;
un sixième moyen de comparateur (6₂) connecté à ladite sortie dudit second moyen de blocage (5) pour en recevoir ladite première (Tₙ₋₁) desdites trois valeurs de mesure consécutives et également connecté audit sixième moyen de multiplication (2_{3b}) pour en recevoir ladite valeur de référence de cadre noir avant prédéterminée (A₃′Tₙ₊₁) et pouvant fonctionner pour générer un sixième signal de détection si cette première valeur de mesure (Tₙ₋₁) est supérieure ou égale à cette valeur de référence (A₃′Tₙ₊₁) ; et
un moyen logique (8, 10, 28, 30, 32) connecté auxdits premier à sixième moyens de comparateur pour en recevoir lesdits premier à sixième signaux de détection et pouvant fonctionner pour générer ledit signal de détection de marge en réponse audit premier signal de détection ou audit quatrième signal de détection ou auxdits second et troisième signaux de détection ou auxdits cinquième et sixième signaux de détection.

18. Appareil de lecture de code à barres selon la revendication 16 ou 17, dans lequel ledit moyen logique comprend :
une première porte ET (8) comportant deux entrées connectées respectivement pour recevoir lesdits second et troisième signaux de détection et comportant également une sortie connectée à une entrée d'une première porte OU (10) dont l'autre entrée est connectée pour recevoir ledit premier signal de détection ;
une seconde porte ET (28) comportant deux entrées connectées respectivement pour recevoir lesdits cinquième et sixième signaux de détection et comportant également une sortie connectée à une entrée d'une seconde porte OU (30) dont l'autre entrée est connectée pour recevoir ledit quatrième signal de détection ; et
une troisième porte OU (32) comportant deux entrées connectées respectivement aux sorties respectives desdites première et seconde portes OU (10, 30), laquelle troisième porte OU génère au niveau de sa sortie ledit signal de détection de marge.
